# EUROPÄISCHE PATENTSCHRIFT

(11) **EP 1 957 557 B1**
(45) Veröffentlichungstag und Bekanntmachung des Hinweises auf die Patenterteilung: **17.07.2019**
(21) Anmeldenummer: 06830098.7
(22) Anmeldetag: 23.11.2006
(51) Int. Cl.: C08G 18/67, C08G 18/78, C08G 18/81, C08G 18/08, C08G 18/28, C09D 175/14

(54) **STRAHLUNGSHÄRTBARE DISPERGIERBARE POLYURETHANE UND POLYURETHANDISPERSIONEN**
RADIATION-CURABLE DISPERSIBLE POLYURETHANES AND POLYURETHANE DISPERSIONS
POLYURETHANES ET DISPERSIONS DE POLYURETHANE DISPERSIBLES ET DURCISSABLES PAR RAYONNEMENT

(30) Priorität: 01.12.2005 DE 102005057684
(43) Veröffentlichungstag der Anmeldung: 20.08.2008
(73) Patentinhaber: BASF SE, 67056 Ludwigshafen am Rhein (DE)
(72) Erfinder: WAGNER, Eva, 67098 Bad Dürkheim (DE); BECK, Erich, 68526 Ladenburg (DE); STEINBRECHER, Angelika Maria, 70197 Stuttgart (DE); HEISCHKEL, Yvonne, 68199 Mannheim (DE); SCHWALM, Reinhold, 67157 Wachenheim (DE)
(74) Vertreter: BASF IP Association
(86) Internationale Anmeldenummer: PCT/EP2006/068825
(87) Internationale Veröffentlichungsnummer: WO 2007/063025

(56) Entgegenhaltungen:
- EP-A1- 1 118 627
- WO-A-01/23453
- WO-A-02/16459
- WO-A-02/079334
- DE-A1- 10 031 258
- US-A- 5 777 024

## Beschreibung

Die vorliegende Erfindung betrifft mit UV-Strahlung härtbare, dispergierbare Polyurethane und Polyurethandispersionen, ein Verfahren zu deren Herstellung und deren Verwendung.

Strahlenhärtbare Polyurethandispersionen sind z. B. aus der DE-A- 44 34 554 bekannt und werden aus Polyisocyanaten, hydroxylgruppenhaltigen Polyestern, Verbindungen mit einer gegenüber Isocyanaten reaktiven Gruppe und einer Säuregruppe und Verbindungen mit einer gegenüber Isocyanaten reaktiven Gruppe und C=C-Doppelbindungen hergestellt. Die Produkte lassen jedoch bzgl. ihrer Verarbeitbarkeit noch Wünsche offen.

Die WO 01/23453 beschreibt mit UV-Strahlung sowie thermisch härtbare Polyurethandispersionen auf Basis von aliphatischen Polyisocyanaten, wobei es sich auch um Allophanatgruppen aufweisende Polyisocyanate handeln kann. Diese Dispersionen enthalten zwingend mit einem Isocyanat-Blockierungsmittel verkappte Isocyanatgruppen und als Diolkomponente solche mit einem Molekulargewicht von weniger als 500 g/mol.

Die DE-A-198 60 041 beschreibt Umsetzungsprodukte von a) Polyisocyanaten und b) niedrigmolekularen Hydroxylverbindungen mit C=C-Doppelbindungen wie Hydroxyalkyl(meth)acrylaten oder Hydroxyalkylvinylethern, die zum größten Teil Allophanate der Polyisocyanate mit den ungesättigten Alkoholen darstellen. Die niedrigmolekularen und niedrigviskosen Reaktionsprodukte weisen im Molekül einen hohen Gehalt an polymerisierbaren C=C-Doppelbindungen auf und lassen sich sowohl mit UV-Strahlen als auch unter Mitwirkung der Isocyanatgruppen, z. B. durch Einwirkung von Wasserdampf, Ammoniak oder Aminen, härten. Eine Anwendung in Form von wässrigen Dispersionen ist nicht beschrieben.

Die EP 392352 beschreibt wässrige Dispersionen von durch Einwirkung energiereicher Strahlung vernetzbaren Polyurethanen. Sie sind aufgebaut aus Polyisocyanaten, Polyol, Polyamin, Aminoalkohol, Polyetherol und Hydroxyalkylacrylat. Sie werden zur Beschichtung von Leder eingesetzt. Die aus den beschriebenen Polyurethanacrylaten hergestellten Beschichtungen weisen eine sehr geringe Härte auf.

Allophanatgruppenhaltige Polyisocyanate werden als Ausgangsverbindungen lediglich in einer breiten Liste gleichwertig unter anderen Polyisocyanaten aufgeführt.

Mittels energiereicher Strahlung härtbare, witterungsstabile Polyurethane beansprucht EP 1118627. Die Beschichtungen werden hergestellt durch Trocknen von Filmen einer Polyurethandispersion, hergestellt aus Polyisocyanaten, cycloaliphatischen Diolen und/oder Diaminen, NCO reaktiven Verbindungen mit mindestens einer ungesättigten Gruppe sowie einer dispergieraktiven Gruppe. Die auf diese Weise hergestellten Beschichtungen sind witterungsstabil. Nachteilig erwies sich die relativ niedrige Kratzbeständigkeit.

Allophanatgruppenhaltige Polyisocyanate werden als Ausgangsverbindungen lediglich in einer breiten Liste gleichwertig unter andern Polyisocyanaten aufgeführt.

Unter den in den Beispielen der EP 1118627 explizit offenbarten Reaktionsbedingungen werden keine Allophanatgruppen gebildet.

EP 574775 beschreibt reaktive, wasseremulgierbare Bindemittel und ihre Verwendung zur Herstellung von Lacken. Die Bindemittel basieren auf Polyurethandispersionen, bestehend aus einem acrylatgruppenhaltigem Präpolymer, z. B. einem Polyesteracrylat, einem oder mehreren Polyisocyanaten sowie einem wasseremulgierbaren Polyester. Die beschriebenen Beschichtungen zeigen lediglich eine geringe Pendelhärte von unter 100 s, die unter mechanischer Belastung zu einer Beschädigung der Beschichtung führen würde.

Allophanatgruppenhaltige Polyisocyanate werden als Ausgangsverbindungen lediglich in einer breiten Liste gleichwertig unter anderen Polyisocyanaten aufgeführt.

Unter den in den Beispielen der EP 574775 offenbarten Reaktionsbedingungen werden keine Allophanatgruppen gebildet.

Strahlenhärtbare, wässrige Dispersionen sind ebenfalls in EP 753531 beschrieben. Sie werden hergestellt aus einem Polyesteracrylat mit einer OH-Zahl von 40 bis 120 mg KOH/g, einem Polyester- oder Polyetherol, einer emulgierbaren Gruppe, Di- oder Polyisocyanaten. Optional kann eine Salzbildung, Dispergierung und eine Kettenverlängerung mit Diaminen durchgeführt werden. Die ethylenisch ungesättigte Gruppe wird ausschließlich über ein hydroxylgruppenhaltiges Präpolymer eingeführt. Damit sind die Möglichkeiten begrenzt, die Doppelbindungsdichte zu erhöhen.

Allophanatgruppenhaltige Polyisocyanate werden als Ausgangsverbindungen lediglich in einer breiten Liste gleichwertig unter andern Polyisocyanaten aufgeführt.

Unter den in den Beispielen der EP 753531 offenbarten Reaktionsbedingungen werden ebenfalls keine Allophanatgruppen gebildet.

In DE 10031258 sind härtbare wässrige Polyurethandispersionen beschrieben, die aus einem Hydroxyethylacrylatallophanat, Hydroxyalkylacrylat einem Polyol, Polyamin oder Polythiol, mindestens einer Säuregruppe und einer basischen Verbindungen und einem thermischen Initiator bestehen. Weiterhin enthalten die beschriebenen Polyurethane noch zwingend einen thermischen Initiator. Das verringert die thermische Beständigkeit. Die beschriebene Konzentration der für die Dispergierung in Wasser notwendigen Säuregruppen reicht nicht aus, um über mehrere Monate lagerstabile Dispersionen zu erhalten. Zudem ist die Härte der mit diesen Dispersionen erhaltenen Beschichtungen verbesserungswürdig.

US 5767220 beschreibt einkomponentige Beschichtungsmassen mit Allophanatgruppen und (Meth)acrylatgruppen durch Reaktion von Isocyanaten mit Hydroxyalkyl(meth)acrylaten und mono- oder polyfunktionellen Alkoholen, die gegebenenfalls, wenn auch weniger bevorzugt, alkoxyliert sein können.

Der vorliegenden Erfindung liegt die Aufgabe zugrunde, alternative, mit UV-Strahlung härtbare wässrige Polyurethandispersionen zur Verfügung zu stellen. Diese sollen Beschichtungen mit guten anwendungstechnischen Eigenschaften, besonders mit guter Chemikalienfestigkeit und/oder guten mechanischen Eigenschaften ergeben, insbesondere eine hohe Härte bei gleichzeitig hoher Elastizität der Beschichtungen, eine hohe Kratzfestigkeit und zudem eine gute Lagerstabilität aufweisen.

Die Aufgabe wird gelöst durch strahlungshärtbare dispergierbare Polyurethane, aufgebaut aus
a) wenigstens einer Verbindung mit mindestens zwei freien Isocyanatgruppen, mindestens einer Allophanatgruppe und mindestens einer über die Allophanatgruppe gebundenen, radikalisch polymerisierbaren C=C-Doppelbindung, in der direkt an die Doppelbindung eine Carbonylgruppe oder ein Sauerstoffatom in Etherfunktion gebunden ist,
b) wenigstens einer Verbindung mit mindestens einer, bevorzugt genau einer gegenüber Isocyanatgruppen reaktiven Gruppe und mindestens einer radikalisch polymerisierbaren C=C-Doppelbindung,
c) gegebenenfalls wenigstens einer Verbindung mit mindestens zwei gegenüber Isocyanatgruppen reaktiven Gruppen, die ausgewählt sind unter Hydroxyl-, Mercapto-, primären und/oder sekundären Aminogruppen,
d) mindestens einer Verbindung mit genau einer gegenüber Isocyanat reaktiven Gruppe und mindestens einer dispergieraktiven nichtionischen Gruppe, wobei es sich bei der dispergieraktiven nichtionischen Gruppe um einen monofunktionellen Polyalkylenoxidpolyetheralkohol handelt, der im statistischen Mittel mindestens 5 und bis zu 50 Ethylenoxideinheiten in einpolymerisierter Form aufweist,
e) gegebenenfalls wenigstens einer von b) und d) verschiedenen Verbindung, die genau eine gegenüber Isocyanatgruppen reaktive Gruppe aufweist sowie
f) gegebenenfalls wenigstens einem von a) verschiedenen Polyisocyanat.

In einer bevorzugten Ausführungsform weisen die erfindungsgemäß hergestellten Polyurethane, also die Umsetzungsprodukte aus den Aufbaukomponenten a) bis d) sowie gegebenenfalls c), e) und/oder f) eine Doppelbindungsdichte von mindestens 1,3 mol/kg, bevorzugt mindestens 1,8, besonders bevorzugt mindestens 2,0 auf.

In einer bevorzugten Ausführungsform beträgt die Menge der härtbaren d.h. ethylenisch ungesättigten Gruppen mehr als 2 mol/kg, bevorzugt mehr als 2 mol/kg bis 8 mol/kg, besonders bevorzugt mindestens 2,1 mol/kg bis 6 mol/kg, ganz besonders bevorzugt 2,2 bis 6, insbesondere 2,3 bis 5 und speziell 2,5 bis 5 mol/kg des Bindemittels (fest), d.h. ohne Wasser oder sonstige Lösemittel.

Ein weiterer Gegenstand der vorliegenden Erfindung sind Polyurethandispersionen, die weniger als 0,1 Gew.-% thermische Initiatoren mit Halbwertzeit bei 60 °C von mindestens einer Stunde enthalten, und die zusätzlich zu den dispergierbaren Polyurethanen aufgebaut aus den Komponenten a) bis f) folgende Komponenten enthalten
h) gegebenenfalls weitere Zusatzstoffe, die ausgewählt sind unter Reaktivverdünnern, Photoinitiaoren und üblichen Lackzusatzstoffen,
i) Wasser sowie
k) gegebenenfalls mindestens ein Di- und/oder Polyamin.

In den erfindungsgemäßen Dispersionen werden bevorzugt keine isocyanatgruppenhaltigen Verbindungen eingesetzt, bei denen die Isocyanatgruppen teilweise oder vollständig mit sogenannten Blockierungsmitteln umgesetzt wurden. Unter Blockierungsmitteln werden dabei Verbindungen verstanden, die Isocyanatgruppen in blockierte (verkappte bzw. geschützte) Isocyanatgruppen umwandeln, die dann unterhalb der sogenannten Deblockierungstemperatur nicht die üblichen Reaktionen einer freien Isocyanatgruppe zeigen. Solche erfindungsgemäß bevorzugt nicht eingesetzten Verbindungen mit blockierten Isocyanatgruppen kommen üblicherweise in Dual-Cure-Beschichtungsmitteln zur Anwendung, die über Isocyanatgruppenhärtung endgehärtet werden. Bevorzugt weisen die erfindungsgemäßen Polyurethandispersionen nach ihrer Herstellung im Wesentlichen keine freien Isocyanatgruppen mehr auf, d.h. in der Regel weniger als 1 Gew.-% NCO, bevorzugt weniger als 0,75, besonders bevorzugt weniger als 0,66 und ganz besonders bevorzugt weniger als 0,3 Gew.-% NCO (berechnet mit einem Molgewicht von 42 g/mol).

### Komponente a)

Bei der Komponente a) handelt es sich um wenigstens eine Verbindung mit mindestens zwei freien Isocyanatgruppen, mindestens einer Allophanatgruppe und mindestens einer über die Allophanatgruppe gebundenen, radikalisch polymerisierbaren C=C-Doppelbindung, die direkt an die Doppelbindung eine Carbonylgruppe oder ein Sauerstoffatom in Etherfunktion gebunden ist.

Die erfindungsgemäß eingesetzte Komponente a) enthält erfindungsgemäß Allophanatgruppen, bevorzugt beträgt der Gehalt an Allophanatgruppen (berechnet als C₂N₂HO₃ = 101 g/mol) 1 bis 35 Gew.-%, bevorzugt von 5 bis 30 Gew.-%, besonders bevorzugt von 10 bis 35 Gew.-%. Die erfindungsgemäßen Polyurethane aus den Aufbaukomponenten a) bis d) sowie gegebenenfalls e) und f) enthalten 1 bis 30 Gew.-%, bevorzugt von 1 bis 25 Gew.-%, besonders bevorzugt von 2 bis 20 Gew.-% Allophanatgruppen. Weiterhin enthält die erfindungsgemäß eingesetzte Komponente a) weniger als 5 Gew.-% Uretdion.

Die erfindungsgemäß enthaltenen Verbindungen der Komponente a) sind vorzugsweise im Wesentlichen frei von anderen sich aus Isocyanatgruppen bildenden Gruppen, besonders Isocyanurat-, Biuret-, Oxadiazintrion-, Iminooxadiazintrion- und/oder Carbo diimidgruppen, d.h. jeweils weniger als 5 Gew%, bevorzugt weniger als 3, besonders bevorzugt weniger als 2, ganz besonders bevorzugt weniger als 1 und insbesondere weniger als 0,5 Gew%.

Vorzugsweise ist die Komponente a) ausgewählt unter Verbindungen der allgemeinen Formel I 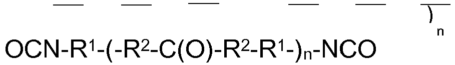 worin
- n: für eine ganze Zahl von 1 bis 10 steht,
- R¹: für eine zweiwertige aliphatische oder alicyclische C₂- bis C₂₀-, bevorzugt C₄- bis C₁₂-, besonders bevorzugt C₆- bis C₁₀- Kohlenwasserstoffeinheit oder eine aromatische C₆- bis C₂₀-, bevorzugt C₆- bis C₁₂-Kohlenwasserstoffeinheit steht,
- R²: in jeder Wiederholungseinheit für -NH- oder für 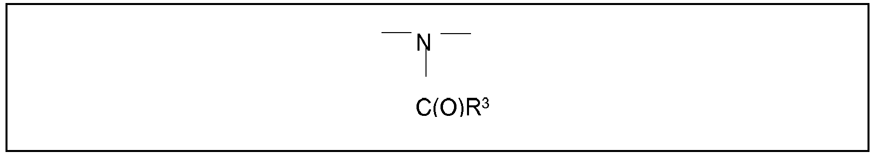
steht,
wobei R³ für einen von einem Alkohol A durch Abstraktion des H-Atoms von der alkoholischen Hydroxylgruppe abgeleiteten Rest steht, wobei der Alkohol A zusätzlich wenigstens eine radikalisch polymerisierbare C=C-Doppelbindung aufweist und wobei direkt an die Doppelbindung eine Carbonylgruppe oder ein Sauerstoffatom in Etherbindung gebunden ist, bevorzugt eine Carbonylgruppe.

Bei den Resten R¹ handelt es sich bevorzugt um solche, die sich durch Abstraktion der Isocyanatgruppe von üblichen aliphatischen, cycloaliphatischen oder aromatischen Polyisocyanaten ableiten. Bei den Diisocyanaten handelt es sich bevorzugt um aliphatische Isocyanate mit 4 bis 20 C-Atomen. Beispiele für übliche Diisocyanate sind aliphatische Diisocyanate wie 1,4-Tetramethylendiisocyanat, 1,6-Hexamethylendi-isocyanat, 2-Methyl-1,5-Diisocyanatopentan, 1,8-Octamethylendiisocyanat, 1,10-Decamethylendiisocyanat, 1,12-Dodecamethylendiisocyanat, Tetradecamethylendiisocyanat, 2,2,4- und 2,4,4-Trimethylhexandiisocyanat, Derivate des Lysindiisocyanates, Tetramethylxylylendiisocyanat, cycloaliphatische Diisocyanate wie 1,4-, 1,3- oder 1,2-Diisocyanatocyclohexan, 4,4'- oder 2,4'-Di(isocyanatocyclohexyl)methan, Isophorondiisocyanat, 1,3- oder 1,4-Bis-(isocyanatomethyl)cyclohexan, 2,4-, und 2,6-Diisocy-anato-1-methylcyclohexan, sowie 3 (bzw. 4), 8 (bzw. 9)-Bis(aminomethyl)-tricyclo[5.2.1.0^{2.6}]decan-Isomerengemische, sowie aromatische Diisocyanate wie 2,4- oder 2,6-Toluylen-diisocyanat, m- oder p-Xylylendiisocyanat, 2,4'- oder 4,4'-Diisocyanatodiphenylmethan, 1,3- oder 1,4-Phenylendiisocyanat, 1-Chlor-2,4-phenylendiisocyanat, 1,5-Naphthylendi-isocyanat, Diphenylen-4,4'-diisocyanat, 4,4'-Diisocyanato-3,3'-dimethyldiphenyldi-isocyanat, 3-Methyldiphenylmethan-4,4'-diisocyanat und Diphenylether-4,4'-diisocy-anat. Es können Gemische der genannten Diisocyanate vorliegen.

Bevorzugt sind 1,6-Hexamethylendiisocyanat, 1,3-Bis(isocyanatomethyl)cyclohexan, Isophorondiisocyanat, Tetramethylxylylendiisocyanat und Di(isocyanatocyclohexyl)methan.

Es können auch Gemische der genannten Diisocyanate vorliegen.

2,2,4- und 2,4,4-Trimethylhexandiisocyanat liegen beispielsweise als Gemisch vor im Verhältnis 1,5:1 bis 1:1,5, bevorzugt 1,2:1 - 1:1,2, besonders bevorzugt 1,1:1 - 1:1,1 und ganz besonders bevorzugt 1:1.

Isophorondiisocyanat liegt beispielsweise als ein Gemisch, und zwar der cis- und trans-Isomere vor, in der Regel im Verhältnis von ca. 60:40 bis 80:20 (w/w), bevorzugt im Verhältnis von ca. 70:30 bis 75:25 und besonders bevorzugt im Verhältnis von ca. 75:25.

Dicyclohexylmethan-4,4'-diisocyanat kann ebenfalls als Gemisch der verschiedenen cis- und trans-Isomere vorliegen.

Aromatische Isocyanate sind solche, die mindestens ein aromatisches Ringsystem enthalten.

Cycloaliphatische Isocyanate sind solche, die mindestens ein cycloaliphatisches Ringsystem enthalten.

Aliphatische Isocyanate sind solche, die ausschließlich gerade oder verzweigte Ketten enthalten, also acyclischen Verbindungen.

Bei den Alkoholen A, von denen sich der Rest R³ ableitet, handelt es sich z. B. um Ester aus α,β-ungesättigten Carbonsäuren, wie Acrylsäure, Methacrylsäure (im folgenden kurz "(Meth)Acrylsäure"), Crotonsäure, Acrylamidglykolsäure, Methacrylamidoglykolsäure oder Vinylessigsäure, bevorzugt Acrylsäure und Methacrylsäure und besonders bevorzugt Acrylsäure, und Polyolen, bevorzugt Diolen, mit vorzugsweise 2 bis 20 C-Atomen und wenigstens 2, bevorzugt genau zwei Hydroxylgruppen, wie Ethylenglykol, 1,2-Propandiol, 1,3-Propandiol, 1,1-Di-methylethan-1,2-diol, 2-Butyl-2-ethyl-1,3-Propandiol, 2-Ethyl-1,3-Propandiol, 2-Methyl-1,3-Propandiol, Neopentylglykol, Hydroxypivalinsäureneopentylglykolester, 1,2-, 1,3- oder 1,4-Butandiol, 1,6-Hexandiol, 1,10-Dekandiol, Bis-(4-hydroxycyclohexan)iso-propyliden, Tetramethylcyclobutandiol, 1,2-, 1,3- oder 1,4-Cyclohexandiol, Cyclooctandiol, Norbornandiol, Pinandiol, Decalindiol, 2-Ethyl-1,3-Hexandiol, 2,4-Diethyl-oktan-1,3-diol, Hydrochinon, Bisphenol A, Bisphenol F, Bisphenol B, Bisphenol S, 2,2-Bis(4-hydroxycyclohexyl)propan, 1,1-, 1,2-, 1,3- und 1,4-Cyclohexandimethanol, 1,2-, 1,3- oder 1,4-Cyclohexandiol, Trimethylolbutan, Trimethylolpropan, Trimethylolethan, Pentaerythrit, Glycerin, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit oder Isomalt mit der Maßgabe, daß der Ester wenigstens eine, bevorzugt genau eine gegenüber Isocyanat reaktive OH-Gruppe aufweist. Weiterhin können sich die Reste R³ auch von den Amiden der (Meth)Acrylsäure mit Aminoalkoholen z. B. 2-Aminoethanol, 3-Amino-1-propanol, 1-Amino-2-propanol oder 2-(2-Aminoethoxy)ethanol und den Vinylethern der vorgenannten Polyole ableiten, sofern sie noch eine freie OH-Gruppe aufweisen.

Bevorzugt leiten sich die Reste R³ von Alkoholen A wie 2-Hydroxy-ethyl(meth)acrylat, 2- oder 3-Hydroxypropyl(meth)acrylat, 1,4-Butandiol-mono(meth)acrylat, Neopentylglykolmono(meth)acrylat, Glycerinmono- und -di(meth)acrylat, Trimethylolpropanmono- und -di(meth)acrylat, Pentaerythritdi- und -tri(meth)acrylat ab. Besonders bevorzugt ist der Alkohol A ausgewählt aus 2-Hydroxyethylacrylat, 2-Hydroxyethylmethacrylat, Hydroxypropyl(meth)acrylat. Ganz besonders bevorzugt ist der Alkohol A 2-Hydroxyethylacrylat. Beispiele für Amide ethylenisch ungesättigter Carbonsäuren mit Aminoalkoholen sind Hydroxyalkyl(meth)acrylamide wie N-Hydroxymethyl(meth)-acrylamid, N-Hydroxyethyl(meth)acrylamid, 5-Hydroxy-3-oxo-pentyl(meth)acrylamid, N-Hydroxyalkylcrotonamide wie N-Hydroxymethylcrotonamid oder N-Hydroxyalkylmaleinimide wie N-Hydroxyethylmaleinimid.

Die Herstellung der Komponente a) ist erfindungsgemäß nicht wesentlich. Bevorzugt erfolgt sie wie beschrieben in der WO 00/39183. Möglich ist aber auch eine Herstellung der Komponente a), wie sie in der DE 102 46 512 beschrieben ist.

### Komponente b)

Komponente b) enthält wenigstens eine Verbindung mit mindestens einer, bevorzugt genau einer gegenüber Isocyanatgruppen reaktiven Gruppe und mindestens einer radikalisch polymerisierbaren C=C-Doppelbindung.

Bevorzugte Verbindungen der Komponenten b) sind z. B. die Ester zwei- oder mehrwertiger Alkohole mit α,β-ethylenisch ungesättigen Mono- und/oder Dicarbonsäuren und deren Anhydriden. Als α,β-ethylenisch ungesättigte Mono- und/oder Dicarbonsäuren und deren Anhydride können z. B. Acrylsäure, Methacrylsäure, Fumarsäure, Maleinsäure, Maleinsäureanhydrid, Crotonsäure, Itaconsäure, etc. eingesetzt werden. Bevorzugt werden Acrylsäure und Methacrylsäure, besonders bevorzugt Acrylsäure eingesetzt.

Geeignete Alkohole sind z. B. Diole wie Ethylenglykol, 1,2-Propandiol, 1,3-Propandiol, 1,1-Dimethylethan-1,2-diol, 2-Butyl-2-ethyl-1,3-Propandiol, 2-Ethyl-1,3-Propandiol, 2-Methyl-1,3-Propandiol, Neopentylglykol, Hydroxypivalinsäureneopentylglykolester, 1,2-, 1,3- oder 1,4-Butandiol, 1,6-Hexandiol, 1,10-Dekandiol, Bis-(4-hydroxycyclohexan)isopropyliden, Tetramethylcyclobutandiol, 1,2-, 1,3- oder 1,4-Cyclohexandiol, Cyclooctandiol, Norbornandiol, Pinandiol, Decalindiol, 2-Ethyl-1,3-Hexandiol, 2,4-Diethyl-oktan-1,3-diol, Hydrochinon, Bisphenol A, Bisphenol F, Bisphenol B, Bisphenol S, 2,2-Bis(4-hydroxycyclohexyl)propan, 1,1-, 1,2-, 1,3- und 1,4-Cyclohexandimethanol, 1,2-, 1,3- oder 1,4-Cyclohexandiol, Tricyclodecandimethanol

Geeignete Triole und Polyole weisen z. B. 3 bis 25, bevorzugt 3 bis 18 Kohlenstoffatome auf. Dazu zählen z. B. Trimethylolbutan, Trimethylolpropan, Trimethylolethan, Pentaerythrit, Glycerin, Ditrimethylolpropan, Dipentaerythrit, Ditrimethylolpropan, Sorbit, Mannit, Diglycerol, Threit, Erythrit, Adonit (Ribit), Arabit (Lyxit), Xylit, Dulcit (Galactit), Maltit oder Isomalt.

In Betracht kommen alle Verbindungen, wie sie oben als Verbindungen A aufgelistet sind.

Vorzugsweise sind die Verbindungen der Komponente b) ausgewählt unter 2-Hydroxyethylacrylat, 2-Hydroxyethylmethacrylat, 2-Hydroxypropylacrylat, 2-Hydroxypropyl-methacrylat, 3-Hydroxybutylacrylat, 3-Hydroxybutylmethacrylat, 4-Hydroxybutylacrylat, 4-Hydroxybutylmethacrylat, 6-Hydroxyhexylacrylat, 6-Hydroxyhexylmethacrylat, 3-Hy-droxy-2-ethylhexylacrylat, 3-Hydroxy-2-ethylhexylmethacrylat, Trimethylolpropanmono- oder -diacrylat, Pentaerythritdi- oder -triacrylat und Mischungen davon.

Besonders bevorzugt sind 2-Hydroxyethylacrylat, 2-Hydroxyethylmethacrylat, 2-Hydroxypropylacrylat, 2-Hydroxypropyl-methacrylat und Pentaerythrittriacrylat.

Die Verbindung b) kann die gleiche Verbindung sein wie der in Komponente a) eingesetzte Alkohol A, oder von diesem unterschiedlich. Bevorzugt handelt es sich bei den Verbindungen b) um eine andere, als den in der Komponente a) eingesetzten Alkohol A.

Mögliche Verbindungen b) sind weiterhin Ester der oben genannten α,β-ungesättigten Säuren, bevorzugt (Meth)Acrylate, besonders bevorzugt Acrylate von Verbindungen der Formel (Ia) bis (Ic), 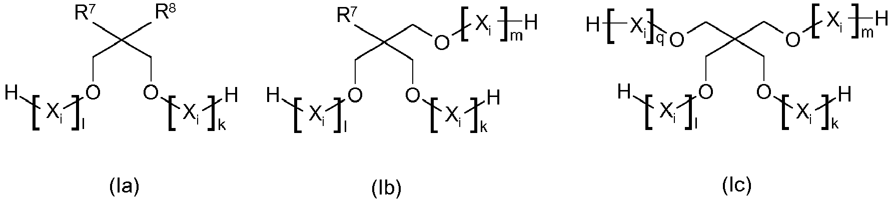 worin
R⁷ und R⁸ unabhängig voneinander Wasserstoff oder gegebenenfalls durch Aryl, Alkyl, Aryloxy, Alkyloxy, Heteroatome und/oder Heterocyclen substituiertes C₁ - C₁₈-Alkyl,
k, l, m, q unabhängig voneinander je für eine ganze Zahl von 1 bis 15, bevorzugt 1 bis 10 und besonders bevorzugt 1 bis 7 steht und
jedes Xᵢ für i = 1 bis k, 1 bis l, 1 bis m und 1 bis q unabhängig voneinander ausgewählt sein kann aus der Gruppe -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CHVin-O-, -CHVin-CH₂-O-, -CH₂-CHPh-O- und -CHPh-CH₂-O-, bevorzugt aus der Gruppe -CH₂-CH₂-O-, -CH₂-CH(CH₃)-O- und -CH(CH₃)-CH₂-O-, und besonders bevorzugt -CH₂-CH₂-O-,
worin Ph für Phenyl und Vin für Vinyl steht.

Darin bedeuten gegebenenfalls durch Aryl, Alkyl, Aryloxy, Alkyloxy, Heteroatome und/oder Heterocyclen substituiertes C₁ - C₁₈-Alkyl beispielsweise Methyl, Ethyl, Propyl, Isopropyl, n-Butyl, sec-Butyl, tert.-Butyl, Pentyl, Hexyl, Heptyl, Octyl, 2-Etylhexyl, 2,4,4-Trimethylpentyl, Decyl, Dodecyl, Tetradecyl, Heptadecyl, Octadecyl, 1,1-Dimethylpropyl, 1,1-Dimethylbutyl, 1,1,3,3-Tetramethylbutyl, bevorzugt Methyl, Ethyl oder n-Propyl, ganz besonders bevorzugt Methyl oder Ethyl.

Bevorzugt handelt es sich dabei um (Meth)Acrylate von ein- bis dreißigfach und besonders bevorzugt drei- bis zwanzigfach ethoxyliertem, propoxyliertem oder gemischt ethoxyliertem und propoxyliertem und insbesondere ausschließlich ethoxyliertem Neopentylglykol, Trimethylolpropan, Trimethylolethan oder Pentaerythrit.

Geeignete Verbindungen b) sind weiterhin die Ester und Amide von Aminoalkoholen mit den zuvor genannten α,β-ethylenisch ungesättigten Mono- und/oder Dicarbonsäuren, Hydroxyalkylvinylether wie 4-Hydroxybutylvinylether etc.

### Komponente c)

Bei der optionalen Komponente c) handelt es sich um wenigstens eine Verbindung mit mindestens zwei gegenüber Isocyanatgruppen reaktiven Gruppen, die ausgewählt sind unter Hydroxyl-, Mercapto-, primären und/oder sekundären Aminogruppen.

Geeignete Verbindungen c) sind niedermolekulare Alkohole c1) und/oder polymere Polyole c2), bevorzugt Verbindungen c1).

Niedermolekulare Alkohole c1) haben ein Molekulargewicht von nicht mehr als 500 g/mol. Besonders bevorzugt sind Alkohole mit 2 bis 20 Kohlenstoffatomen und 2 bis 6 Hydroxylgruppen wie z. B. die zuvor genannten Glykole. Bevorzugt sind insbesondere hydrolysestabile kurzkettige Diole mit 4 bis 20, bevorzugt 6 bis 12 Kohlenstoffatomen. Dazu zählen vorzugsweise 1,1-, 1,2-, 1,3- oder 1,4-Di(hydroxymethyl)cyclohexan, Bis(hydroxycyclohexyl)propan, Tetramethylcyclobutandiol, Cyclooctandiol oder Norbornandiol. Besonders bevorzugt werden aliphatische Kohlenwasserstoffdiole, wie die isomeren Butandiole, Pentandiole, Hexandiole, Heptandiole, Octandiole, Nonandiole, Decandiole, Undecandiole und Dodecandiole eingesetzt. Besonders bevorzugt sind 1,2-, 1,3- oder 1,4-Butandiol, 1,4-Pentandiol, 1,5-Pentandiol, 1,6-Hexandiol, 2,5-Hexandiol, Dihydroxymethylcyclohexan, Bis-hydroxycyclohexyl-propan, etc.

Geeignete Verbindungen c2) sind weiterhin polymere Polyole. Vorzugsweise liegt das zahlenmittlere Molekulargewicht Mₙ dieser Polymere in einem Bereich von etwa 500 bis 100.000, besonders bevorzugt 500 bis 10.000. Die OH-Zahlen liegen vorzugsweise in einem Bereich von etwa 20 bis 300 mg KOH/g Polymer.

Bevorzugte Polymere c2) sind z. B. Copolymerisate, die wenigstens einen der zuvor genannten Monoester zwei- oder mehrwertiger Alkohole mit wenigstens einer α,β-ethylenisch ungesättigten Mono- und/oder Dicarbonsäure und wenigstens ein weiteres Comonomer, vorzugsweise ausgewählt unter Vinylaromaten, wie z. B. Styrol, Estern der zuvor genannten α,β-ungesättigten Mono- und/oder Dicarbonsäuren mit Monoalkoholen, Vinylestern von bis zu 20 Kohlenstoffatomen enthaltenden Carbonsäuren, Vinylhalogeniden, nicht-aromatischen Kohlenwasserstoffen mit 4 bis 8 Kohlenstoffatomen und 1 oder 2 Doppelbindungen, ungesättigten Nitrilen, etc. und Mischungen davon einpolymerisiert enthalten. Dazu zählen weiterhin (teil)hydrolysierte Vinylester-Polymere, bevorzugt Polyvinylacetate.

Dazu zählen weiterhin Polyesterole auf Basis von aliphatischen, cycloaliphatischen und/oder aromatischen Di-, Tri- und/oder Polycarbonsäuren mit Di-, Tri- und/oder Polyolen sowie Polyesterole auf Lacton-Basis.

Polyesterpolyole, sind z.B. aus Ullmanns Encyklopädie der technischen Chemie, 4. Auflage, Band 19, S. 62 bis 65 bekannt. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt:
Oxalsäure, Maleinsäure, Fumarsäure, Bernsteinsäure, Glutarsäure, Adipinsäure, Sebacinsäure, Dodekandisäure, o-Phthalsäure, Isophthalsäure, Terephthalsäure, Trimellithsäure, Azelainsäure, 1,4-Cyclohexandicarbonsäure oder Tetrahydrophthalsäure, Korksäure, Azelainsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäureanhydrid, dimere Fettsäuren, deren Isomere und Hydrierungsprodukte sowie veresterbare Derivate, wie Anhydride oder Dialkylester, beispielsweise C₁-C₄-Alkylester, bevorzugt Methyl-, Ethyl- oder n-Butylester, der genannten Säuren eingesetzt werden. Bevorzugt sind Dicarbonsäuren der allgemeinen Formel HOOC-(CH₂)_{y}-COOH, wobei y eine Zahl von 1 bis 20, bevorzugt eine gerade Zahl von 2 bis 20 ist, besonders bevorzugt Bernsteinsäure, Adipinsäure, Sebacinsäure und Dodecandicarbonsäure.

Als mehrwertige Alkohole kommen zur Herstellung der Polyesterole in Betracht 1,2-Propandiol, Ethylenglykol, 2,2-Dimethyl-1,2-Ethandiol, 1,3-Propandiol, 1,2-Butandiol, 1,3-Butandiol, 1,4-Butandiol, 3-Methylpentan-1,5-diol, 2-Ethylhexan-1,3-diol, 2,4-Diethyloctan-1,3-diol, 1,6-Hexandiol, Poly-THF mit einer Molmasse zwischen 162 und 2000, Poly-1,3-propandiol mit einer Molmasse zwischen 134 und 2000, Poly-1,2-propandiol mit einer Molmasse zwischen 134 und 2000, Polyethylenglykol mit einer Molmasse zwischen 106 und 2000, Neopentylglykol, Hydroxypivalinsäureneopentylglykolester, 2-Ethyl-1,3-Propandiol, 2-Methyl-1,3-Propandiol, 2,2-Bis(4-hydroxycyclohexyl)propan, 1,1-, 1,2-, 1,3- und 1,4-Cyclohexandimethanol, 1,2-, 1,3- oder 1,4-Cyclohexandiol, Trimethylolbutan, Trimethylolpropan, Trimethylolethan, Neopentylglykol, Pentaerythrit, Glycerin, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit oder Isomalt, die gegebenenfalls wie oben beschrieben alkoxyliert sein können.

Bevorzugt sind Alkohole der allgemeinen Formel HO-(CH₂)ₓ-OH, wobei x eine Zahl von 1 bis 20, bevorzugt eine gerade Zahl von 2 bis 20 ist. Bevorzugt sind Ethylenglycol, Butan-1,4-diol, Hexan-1,6-diol, Octan-1,8-diol und Dodecan-1,12-diol. Weiterhin bevorzugt ist Neopentylglykol.

Ferner kommen auch Polycarbonat-Diole, wie sie z.B. durch Umsetzung von Phosgen mit einem Überschuß von den als Aufbaukomponenten für die Polyesterpolyole genannten niedermolekularen Alkohole erhalten werden können, in Betracht.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist und ein H-Atom einer Methyleneinheit auch durch einen C₁- bis C₄-Alkylrest substituiert sein kann. Beispiele sind ε-Caprolacton, β-Propiolacton, gamma-Butyrolacton und/oder Methyl-ε-caprolacton, 4-Hydroxybenzoesäure, 6-Hydroxy-2-naphthalinsäure oder Pivalolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Dazu zählen weiterhin Polyetherole, die durch Polymerisation von cyclischen Ethern oder durch Umsetzung von Alkylenoxiden mit einem Startermolekül erhältlich sind, sowie durch Umsetzung von Polyetherolen mit Ammoniak erhältliche α,ω-Diaminopolyether.

Beispiele dafür sind die allgemein als Jeffamine® bekannten Produkte der Firma Huntsman.

Bei den hier genannten Jeffaminen® handelt es sich um Mono-, Di- oder Triamine, die auf einer Polyetherbasis, Polyethylenoxide, Polypropylenoxide oder gemischte Polyethylenoxide/Polypropylenoxide, beruhen und eine Molmasse bis zu ca. 5000 g/mol aufweisen können.

Beispiele für derartige Monoamine sind die sogenannten Jeffamine® M-Serien, die methylgekappte Polyalkylenoxide mit eine Aminofunktion darstellen, wie M-600 (XTJ-505), mit einem Propylenoxid (PO)/Ethylenoxid (EO)-Verhältnis von ca. 9:1 und einer Molmasse von ca. 600, M-1000 (XTJ-506): PO/EO-Verhältnis 3:19, Molmasse ca. 1000, M-2005 (XTJ-507): PO/EO-Verhältnis 29:6, Molmasse ca. 2000 oder M-2070: PO/EO-Verhältnis 10:31, Molmasse ca. 2000.

Beispiele für derartige Diamine sind die sogenannten Jeffamine® D- oder ED-Serien. Die D-Serie sind aminofunktionalisierte Polypropylendiole aus 3 - 4 1,2-Propyleneinheiten (Jeffamine® D-230, mittlere Molmasse 230), 6 - 7 1,2-Propyleneinheiten (Jeffamine® D-400, mittlere Molmasse 400), im Schnitt ca. 34 1,2-Propyleneinheiten (Jeffamine® D-2000, mittlere Molmasse 2000) oder im Schnitt ca. 69 1,2-Propyleneinheiten (Jeffamine® XTJ-510 (D-4000), mittlere Molmasse 4000). Diese Produkte können teilweise auch als Aminoalkohole vorliegen. Die ED-Serie sind Diamine auf Basis von Polyethylenoxiden, die idealiserterweise beidseitig propoxyliert sind, beispielsweise Jeffamine® HK-511 (XTJ-511) aus 2 Ethylenoxid- und 2 Propylenoxideinheiten mit einer mittleren Molmasse von 220, Jeffamine® XTJ-500 (ED-600) aus 9 Ethylenoxid- und 3,6 Propylenoxideinheiten mit einer mittleren Molmasse von 600 sowie Jeffamine® XTJ-502 (ED-2003) aus 38,7 Ethylenoxid- und 6 Propylenoxideinheiten mit einer mittleren Molmasse von 2000.

Beispiele für Triamine sind Jeffamine® T-403, ein Triamin auf Basis eines mit 5 - 6 1,2-Propyleneinheiten modifizierten Trimethylolpropan, Jeffamine® T-5000, ein Triamin auf Basis eines mit ca. 85 1,2-Propyleneinheiten modifizierten Glycerin sowie Jeffamine® XTJ-509 (T-3000), ein Triamin auf Basis eines mit 50 1,2-Propyleneinheiten modifizierten Glycerin.

Die zuvor genannten Komponenten c) können einzeln oder als Gemische eingesetzt werden.

### Komponente d)

Als Komponente d) kommen Verbindungen mit genau einer gegenüber Isocyanat reaktiven Gruppe und mindestens einer, bevorzugt genau einer dispergieraktiven nichtionischen Gruppe in Betracht.

Verbindungen d) mit mehr als einer gegenüber Isocyanat reaktiven Gruppe sind erfindungsgemäß ausdrücklich ausgeschlossen.

Selbstverständlich sind auch Gemische denkbar.

Erfindungsgemäß handelt es sich bei den Verbindungen d) um solche Verbindungen, die keine polymerisierbare C-C-Bindungen enthalten.

Beispiele für gegenüber Isocyanat reaktiven Gruppen RG sind -OH, -SH, -NH₂ oder-NHR¹⁰, worin R¹⁰ die oben angeführte Bedeutung hat, jedoch von dem dort verwendeten Rest verschieden sein kann, bevorzugt sind -OH, -NH₂ oder -NHR¹⁰, besonders bevorzugt sind sind -OH oder -NH₂, und ganz besonders bevorzugt ist -OH.

Verbindungen mit genau einer gegenüber Isocyanat reaktiven Gruppe und mindestens einer dispergieraktiven nichtionischen Gruppe sind monofunktionelle Polyalkylenoxidpolyetheralkohole, die durch Alkoxylierung geeigneter Startermoleküle erhältlich sind.

Geeignete Startermoleküle zur Herstellung solcher Polyalkylenoxidpolyetheralkohole sind Thiolverbindungen, Monohydroxyverbindungen der allgemeinen Formel

R¹⁴-O-H

oder sekundäre Monoamine der allgemeinen Formel

R¹²R¹³N-H,

in welchen
R¹², R¹³ und R¹⁴ unabhängig voneinander unabhängig voneinander jeweils C₁ - C₁₈-Alkyl, gegebenenfalls durch ein oder mehrere Sauerstoff- und/oder Schwefelatome und/oder ein oder mehrere substituierte oder unsubstituierte Iminogruppen unterbrochenes C₂ - C₁₈-Alkyl, C₆ - C₁₂-Aryl, C₅ - C₁₂-Cycloalkyl oder einen fünf- bis sechsgliedrigen, Sauerstoff-, Stickstoff- und/oder Schwefelatome aufweisenden Heterocyclus bedeuten oder R¹² und R¹³ gemeinsam einen ungesättigten, gesättigten oder aromatischen und gegebenenfalls durch ein oder mehrere Sauerstoff- und/oder Schwefelatome und/oder ein oder mehrere substituierte oder unsubstituierte Iminogruppen unterbrochenen Ring bilden, wobei die genannten Reste jeweils durch funktionelle Gruppen, Aryl, Alkyl, Aryloxy, Alkyloxy, Halogen, Heteroatome und/oder Heterocyclen substituiert sein können.

Bevorzugt sind R¹², R¹³ und R¹⁴ unabhängig voneinander C₁- bis C₄-Alkyl, besonders bevorzugt sind R¹², R¹³ und R¹⁴ Methyl.

Beispielsweise geeignete einwertige Startermoleküle können gesättigte Monoalkohole wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, Cyclopentanol, die isomeren Methylcyclohexanole oder Hydroxymethylcyclohexan, 3-Ethyl-3-hydroxymethyloxetan, oder Tetrahydrofurfurylalkohol; aromatische Alkohole wie Phenol, die isomeren Kresole oder Methoxyphenole, araliphatische Alkohole wie Benzylalkohol, Anisalkohol oder Zimtalkohol; sekundäre Monoamine wie Dimethylamin, Diethylamin, Dipropylamin, Diisopropylamin, Di-n-Butylamin, Diisobutylamin, Bis-(2-ethylhexyl)-amin, N-Methyl- und N-Ethylcyclohexylamin oder Dicyclohexylamin, heterocylische sekundäre Amine wie Morpholin, Pyrrolidin, Piperidin oder 1H-Pyrazol, sowie Aminoalkohole wie 2-Dimethylaminoethanol, 2-Diethylaminoethanol, 2-Diisopropylaminoethanol, 2-Dibutylaminoethanol, 3-(Dimethylamino)-1-propanol oder 1-(Dimethylamino)-2-propanol.

Bevorzugt sind als Startermoleküle Alkohole mit nicht mehr als 6 Kohlenstoffatomen, besonders bevorzugt nicht mehr als 4 Kohlenstoffatomen, ganz besonders bevorzugt nicht mehr als 2 Kohlenstoffatomen und insbesondere Methanol.

Für die Alkoxylierungsreaktion geeignete Alkylenoxide sind Ethylenoxid, Propylenoxid, *iso*-Butylenoxid, Vinyloxiran und/oder Styroloxid, die in beliebiger Reihenfolge oder auch im Gemisch bei der Alkoxylierungsreaktion eingesetzt werden können.

Bevorzugte Alkylenoxide sind Ethylenoxid, Propylenoxid und deren Gemische, besonders bevorzugt ist Ethylenoxid.

Bevorzugte Polyetheralkohole sind solche auf Basis von Polyalkylenoxidpolyetheralkoholen, bei deren Herstellung gesättigte aliphatische oder cycloaliphatische Alkohole der oben genannten Art als Startermoleküle eingesetzt wurden. Ganz besonders bevorzugt sind solche auf Basis von Polyalkylenoxidpolyetheralkoholen, die unter Verwendung von gesättigten aliphatischen Alkoholen mit 1 bis 4 Kohlenstoffatomen im Alkylrest hergestellt wurden. Insbesondere bevorzugt sind auf Methanol gestartete Polyalkylenoxidpolyetheralkohole.

Die einwertigen Polyalkylenoxidpolyetheralkohole weisen im statistischen Mittel mindestens 5 Ethylenoxideinheiten, pro Molekül in einpolymerisierter Form auf, besonders bevorzugt mindestens 7, ganz besonders bevorzugt mindestens 10 und insbesondere mindestens 15.

Die einwertigen Polyalkylenoxidpolyetheralkohole weisen im statistischen Mittel bis zu 50 Alkylenoxideinheiten, bevorzugt Ethylenoxideinheiten, pro Molekül in einpolymerisierter Form auf, bevorzugt bis zu 45, besonders bevorzugt bis zu 40 und ganz besonders bevorzugt bis zu 30.

Das Molgewicht der einwertigen Polyalkylenoxidpolyetheralkohole beträgt bevorzugt bis zu 2000, besonders bevorzugt nicht über 1000 g/mol, ganz besonders bevorzugt 500 ± 1000 g/mol.

Bevorzugte Polyetheralkohole sind somit Verbindungen der Formel

R¹⁴-O-[-Yᵢ-]ₚ-H

worin
R¹⁴ die oben genannten Bedeutungen hat,
p für eine ganze Zahl von 5 bis 50, bevorzugt 5 bis 45, besonders bevorzugt 7 bis 40 und ganz besonders bevorzugt 10 bis 30 steht und
jedes Yᵢ für i = 1 bis p unabhängig voneinander ausgewählt sein kann aus der Gruppe bestehend aus -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CHVin-O-, -CHVin-CH₂-O-, -CH₂-CHPh-O- und -CHPh-CH₂-O-, bevorzugt aus der Gruppe -CH₂-CH₂-O-, -CH₂-CH(CH₃)-O- und -CH(CH₃)-CH₂-O-, und besonders bevorzugt -CH₂-CH₂-O-
worin Ph für Phenyl und Vin für Vinyl steht.

### Komponente e)

In den erfindungsgemäßen Polyurethanen, bzw Polyurethandispersionen kann als optionale Komponente e) wenigstens eine weitere Verbindung mit genau einer gegenüber Isocyanatgruppen reaktiven Gruppe eingesetzt werden. Bei dieser Gruppe kann es sich um eine Hydroxyl-, Mercapto-, oder eine primäre oder sekundäre Aminogruppe handeln. Geeignete Verbindungen e) sind die üblichen, dem Fachmann bekannten Verbindungen, die als sogenannte Abstopper zur Herabsetzung der Zahl reaktiver freier Isocyanatgruppen bzw. zur Modifizierung der Polyurethaneigenschaften üblicherweise bei der Polyurethanherstellung eingesetzt werden. Dazu zählen z. B. monofunktionelle Alkohole, wie Methanol, Ethanol, n-Pro-panol, Isopropanol, n-Butanol etc. Geeignete Komponenten e) sind auch Amine mit einer primären oder sekundären Aminogruppe, wie z. B. Methylamin, Ethylamin, n-Pro-pylamin, Diisopropylamin, Dimethylamin, Diethylamin, Di-n-propylamin, Diisopropyl-amin etc.

### Komponente f)

In den erfindungsgemäßen Polyurethanen bzw. Polyurethandispersionen kann als optionale Komponente f) wenigstens ein von den Verbindungen der Komponenten a) verschiedenes Polyisocyanat eingesetzt werden. Erfindungsgemäß werden als Komponenten f) keine Polyisocyanate eingesetzt, bei denen die Isocyanatgruppen mit einem Blockierungsmittel umgesetzt wurden.

Bevorzugte Verbindungen f) sind Polyisocyanate mit einer NCO-Funktionalität von 2 bis 4,5, besonders bevorzugt 2 bis 3,5. Bevorzugt werden als Komponente f) aliphatische, cycloaliphatische und araliphatische Diisocyanate eingesetzt. Dies können beispielsweise die oben unter a) aufgeführten Diisocyanate sein, sind jedoch von der im Polyurethan tatsächlich eingesetzten Verbindung a) verschieden. Bevorzugt sind Verbindungen f), die neben 2 oder mehreren Isocyanatgruppen noch eine Gruppe, ausgewählt aus der Gruppe der Urethan-, Harnstoff-, Biuret-, Allophanat-, Carbodiimid-, Urethonimin-, Uretdion- und Isocyanuratgruppen aufweisen.

Dies sind beispielsweise
1) Isocyanuratgruppen aufweisende Polyisocyanate von aromatischen, aliphatischen und/oder cycloaliphatischen Diisocyanaten. Besonders bevorzugt sind hierbei die entsprechenden aliphatischen und/oder cycloaliphatischen Isocyanato-Isocyanurate und insbesondere die auf Basis von Hexamethylendiisocyanat und Isophorondiisocyanat. Bei den dabei vorliegenden Isocyanuraten handelt es sich insbesondere um Tris-isocyanatoalkyl- bzw. Tris-isocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.-%, insbesondere 15 bis 25 Gew.-% und eine mittlere NCO-Funktionalität von 2,6 bis 4,5.
2) Uretdiondiisocyanate mit aromatisch, aliphatisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten.
   Die Uretdiondiisocyanate können erfindungsgemäß als alleinige Komponente oder im Gemisch mit anderen Polyisocyanaten, insbesondere den unter 1) genannten, eingesetzt werden.
3) Biuretgruppen aufweisende Polyisocyanate mit aromatisch, cycloaliphatisch oder aliphatisch gebundenen, bevorzugt cycloaliphatisch oder aliphatisch gebundenen Isocyanatgruppen, insbesondere Tris(6-isocyanatohexyl)biuret oder dessen Gemische mit seinen höheren Homologen. Diese Biuretgruppen aufweisenden Polyisocyanate weisen im allgemeinen einen NCO-Gehalt von 18 bis 22 Gew.-% und eine mittlere NCO-Funktionalität von 2,8 bis 4,5 auf.
4) Urethan- und/oder Allophanatgruppen aufweisende Polyisocyanate mit aromatisch, aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Hexamethylendiisocyanat oder an Isophorondiisocyanat mit ein- oder mehrwertigen Alkoholen wie z.B. Methanol, Ethanol, *iso*-Propanol, n-Propanol, n-Butanol, *iso*-Butanol, *sek*-Butanol, *tert-*Butanol, n-Hexanol, n-Heptanol, n-Octanol, n-Decanol, n-Dodecanol (Laurylalkohol), 2-Ethylhexanol, n-Pentanol, Stearylalkohol, Cetylalkohol, Laurylalkohol, Ethylenglykolmonomethylether, Ethylenglykolmonoethylether, 1,3-Propandiolmonomethylether, Cyclopentanol, Cyclohexanol, Cyclooctanol, Cyclododecanol, Trimethylolpropan, Neopentylglykol, Pentaerythrit, 1,4-Butandiol, 1,6-Hexandiol, 1,3-Propandiol, 2-Ethyl-1,3-Propandiol, 2-Methyl-1,3-Propandiol, Ethylenglykol, Diethylenglykol, Triethylenglykol, Tetraethylenglykol, Pentaethylenglykol, Glycerin, 1,2-Dihydroxypropan, 2,2-Dimethyl-1,2-ethandiol, 1,2-Butandiol, 1,4-Butandiol, 3-Methylpentan-1,5-diol, 2-Ethylhexan-1,3-diol, 2,4-Diethyloctan-1,3-diol, Hydroxypivalinsäureneopentylglykolester, Ditrimethylolpropan, Dipentaerythrit, 2,2-Bis(4-hydroxycyclohexyl)propan, 1,1-, 1,2-, 1,3- und 1,4-Cyclohexandimethanol, 1,2-, 1,3- oder 1,4-Cyclohexandiol oder deren Gemischen erhalten werden können. Diese Urethan- und/oder Allophanatgruppen aufweisenden Polyisocyanate haben im allgemeinen einen NCO-Gehalt von 12 bis 20 Gew.-% und eine mittlere NCO-Funktionalität von 2,5 bis 4,5.
5) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid zugänglich.
6) Iminooxadiazindiongruppen enthaltende Polyisocyanate, vorzugsweise von Hexamethylendiisocyanat oder Isophorondiisocyanat abgeleitet. Solche Iminooxadiazindiongruppen enthaltenden Polyisocyanate sind aus Diisocyanaten mittels spezieller Katalysatoren herstellbar.
7) Uretonimin-modifizierte Polyisocyanate.
8) Carbodiimid-modifizierte Polyisocyanate.

Die Polyisocyanate 1) bis 8) können im Gemisch, gegebenenfalls auch im Gemisch mit Diisocyanaten, eingesetzt werden.

Bevorzugt werden als Komponente f) Isophorondiisocyanat, 1,3- und 1,4-Bis(isocyanatomethyl)cyclohexan, deren Isocyanurate, Biurete und Mischungen davon eingesetzt.

Enthalten die erfindungsgemäßen Dispersionen neben der Komponente a) noch eine Komponente f), so beträgt der Anteil der Verbindungen der Komponente f) vorzugsweise 0,1 bis 90 Gew.-%, besonders bevorzugt 1 bis 50 Gew.-%, insbesondere 5 bis 30 Gew.-%, bezogen auf die Gesamtmenge der Verbindungen der Komponenten a) und f).

Thermische Initiatoren im Sinne der vorliegenden Erfindung sind solche, die eine Halbwertzeit bei 60°C von mindestens einer Stunde aufweisen. Die Halbwertszeit eines thermischen Initiators, ist die Zeit, nachdem die Ausgangsmenge des Initiators zur Hälfte in freie Radikale zerfallen ist.

Thermische Initiatoren sind erfindungsgemäß zwingend abwesend, liegen also in Mengen von weniger als 0,1 Gew.-% vor.

### Komponente h)

Die erfindungsgemäße Dispersion kann wenigstens eine weitere Verbindung enthalten, wie sie üblicherweise als Reaktivverdünner eingesetzt wird. Dazu zählen z. B. die Reaktivverdünner, wie sie in P.K.T. Oldring (Herausgeber), Chemistry & Technology of UV & EB Formulations for Coatings, Inks & Paints, Vol. II, Chapter III: Reactive Diluents for UV & EB Curable Formulations, Wiley and SITA Technology, London 1997 beschrieben sind.

Bevorzugte Reaktivverdünner sind von der Komponente b) verschiedene Verbindungen, die wenigstens eine radikalisch polymerisierbare C=C-Doppelbindungen aufweisen.

Reaktivverdünner sind beispielsweise Ester der (Meth)acrylsäure mit Alkoholen, die 1 bis 20 C-Atome aufweisen, z.B. (Meth)acrylsäuremethylester, (Meth)acrylsäureethylester, (Meth)acrylsäurebutylester, (Meth)acrylsäure-2-ethylhexylester, 2-Hydroxyethylacrylat, 4-Hydroxybutylacrylat, Dihydrodicyclopentadienylacrylat, Vinylaromatische Verbindungen, z.B. Styrol, Divinylbenzol, α,β-ungesättigte Nitrile, z.B. Acrylnitril, Methacrylnitril, α,β-ungesättigte Aldehyde, z.B. Acrolein, Methacrolein, Vinylester, z.B. Vinylacetat, Vinylpropionat, halogenierte ethylenisch ungesättigte Verbindungen, z.B. Vinylchlorid, Vinylidenchlorid, konjugierte ungesättigte Verbindungen, z.B. Butadien, Isopren, Chloropren, einfach ungesättigte Verbindungen, z.B. Ethylen, Propylen, 1-Buten, 2-Buten, iso-Buten, cyclische einfach ungesättigte Verbindungen, z.B. Cyclopenten, Cyclohexen, Cyclododecen, N-Vinylformamid, Allylessigsäure, Vinylessigsäure, monoethylenisch ungesättigten Carbonsäuren mit 3 bis 8 C-Atomen sowie deren wasserlöslichen Alkalimetall-, Erdalkalimetall- oder Ammoniumsalze wie beispielsweise: Acrylsäure, Methacrylsäure, Dimethylacrylsäure, Ethacrylsäure, Maleinsäure, Citraconsäure, Methylenmalonsäure, Crotonsäure, Fumarsäure, Mesaconsäure und Itaconsäure, Maleinsäure, N-Vinylpyrrolidon, N-Vinyllactame, wie z.B. N-Vinylcaprolactam, N-Vinyl-N-Alkyl-carbonsäureamide oder N-Vinyl-carbonsäureamide, wie z. B. N-Vinylacetamid, N-Vinyl-N-methylformamid und N-Vinyl-N-methylacetamid oder Vinylether, z.B. Methylvinylether, Ethylvinylether, *n*-Propylvinylether, *iso*-Propylvinylether, *n*-Butylvinylether, *sek*-Butylvinylether, *iso*-Butylvinylether, *tert*-Butylvinylether, 4-Hydroxybutylvinylether, sowie Gemische davon.

Verbindungen mit mindestens zwei radikalisch polymerisierbare C=C-Doppelbindungen: Dazu zählen insbesondere die Diester und Polyester der zuvorgenannten α,β-ethylenisch ungesättigten Mono- und/oder Dicarbonsäuren mit Diolen oder Polyolen. Besonders bevorzugt sind Hexandioldiacrylat, Hexandioldimethacrylat, Octandioldiacrylat, Octandioldimethacrylat, Nonandioldiacrylat, Nonandioldimethacrylat, Decandioldiacrylat, Decandioldimethacrylat, Pentaerythritdiacrylat, Dipentaerythrittetraacrylat, Dipentaerythrittriacrylat, Pentaerythrittetraacrylat, etc. Bevorzugt sind auch die Ester alkoxylierter Polyole, mit α,β-ethylenisch ungesättigten Mono- und/oder Dicarbonsäuren wie z. B. die Polyacrylate oder -methacrylate von alkoxyliertem Trimethylolpropan, Glycerin oder Pentaerythrit. Geeignet sind weiterhin die Ester alicylischer Diole, wie Cyclohexandioldi(meth)acrylat und Bis(hydroxymethyl-ethyl)cyclohexan-di(meth)acrylat. Weitere geeignete Reaktivverdünner sind Trimethylolpropanmonoformalacrylat, Glycerinformalacrylat, 4-Tetrahydropyranylacrylat, 2-Tetrahydropyranylmethacrylat und Tetrahydrofurfurylacrylat.

Weitere geeignete Reaktivverdünner sind beispielsweise Epoxy(meth)acrylate, Urethan(meth)acrylate, Polyether(meth)acrylate, Polyester(meth)acrylate oder Polycarbonat(meth)acrylate

Urethan(meth)acrylate sind z.B. erhältlich durch Umsetzung von Polyisocyanaten mit Hydroxyalkyl(meth)acrylaten oder -vinylethern und gegebenenfalls Kettenverlängerungsmitteln wie Diolen, Polyolen, Diaminen, Polyaminen oder Dithiolen oder Polythiolen.

Derartige Urethan(meth)acrylate enthalten als Aufbaukomponenten im wesentlichen:
(1) mindestens ein organisches aliphatisches, aromatisches oder cycloaliphatisches Di- oder Polyisocyanat, wie beispielsweise die oben unter a) aufgeführten
(2) mindestens eine Verbindung mit mindestens einer gegenüber Isocyanat reaktiven Gruppe und mindestens einer radikalisch polymerisierbaren ungesättigten Gruppe, wie beispielsweise die oben angeführten Alkohole A oder die weiter oben unter b) aufgeführten, und
(3) gegebenenfalls mindestens eine Verbindung mit mindestens zwei gegenüber Isocyanat reaktiven Gruppen wie beispielsweise die unten unter c) aufgeführten.

Die Komponenten (1), (2) und (3) können die gleichen sein, wie oben für die erfindungsgemäßen Polyurethane beschrieben.

Die Urethan(meth)acrylate haben vorzugsweise ein zahlenmittleres Molgewicht Mₙ von 500 bis 20 000, insbesondere von 500 bis 10 000 besonders bevorzugt 600 bis 3000 g/mol (bestimmt durch Gelpermeationschromatographie mit Tetrahydrofuran und Polystyrol als Standard).

Die Urethan(meth)acrylate haben vorzugsweise einen Gehalt von 1 bis 5, besonders bevorzugt von 2 bis 4 Mol (Meth)acrylgruppen pro 1000 g Urethan(meth)acrylat.

Besonders bevorzugte Urethan(meth)acrylate weisen eine mittlere OH-Funktionalität von 1,5 bis 4,5 auf.

Epoxid(meth)acrylate sind bevorzugt erhältlich durch Umsetzung von Epoxiden mit (Meth)acrylsäure. Als Epoxide in Betracht kommen z.B epoxidierte Olefine, aromatische Glycidylether oder aliphatische Glycidylether, bevorzugt solche von aromatischen oder aliphatischen Glycidylethern.

Epoxidierte Olefine können beispielsweise sein Ethylenoxid, Propylenoxid, *iso*-Butylenoxid, 1-Butenoxid, 2-Butenoxid, Vinyloxiran, Styroloxid oder Epichlorhydrin, bevorzugt sind Ethylenoxid, Propylenoxid, *iso*-Butylenoxid, Vinyloxiran, Styroloxid oder Epichlorhydrin, besonders bevorzugt Ethylenoxid, Propylenoxid oder Epichlorhydrin und ganz besonders bevorzugt Ethylenoxid und Epichlorhydrin.

Aromatische Glycidylether sind z.B. Bisphenol-A-diglycidylether, Bisphenol-F-diglycidylether, Bisphenol-B-diglycidylether, Bisphenol-S-diglycidylether, Hydrochinondiglycidylether, Alkylierungsprodukte von Phenol/Dicyclopentadien, z.B. 2,5-bis[(2,3-E-poxypropoxy)phenyl]octahydro-4,7-methano-5H-inden) (CAS-Nr. [13446-85-0]), Tris[4-(2,3-epoxypropoxy)phenyl]methan Isomere)CAS-Nr. [66072-39-7]), Phenol basierte Epoxy Novolake (CAS-Nr. [9003-35-4]) und Kresol basierte Epoxy Novolake (CAS-Nr. [37382-79-9]).

Bevorzugt sind Bisphenol-A-diglycidylether, Bisphenol-F-diglycidylether, Bisphenol-B-diglycidylether, Bisphenol-S-diglycidylether, besonders bevorzugt ist Bisphenol-A-diglycidylether.

Aliphatische Glycidylether sind beispielsweise 1,4-Butandioldiglycidether, 1,6-Hexandioldiglycidylether, Trimethylolpropantriglycidylether, Pentaerythrittetraglycidylether, 1,1,2,2-tetrakis[4-(2,3-epoxypropoxy)phenyl]ethan (CAS-Nr. [27043-37-4]), Diglycidylether von Polypropylenglykol (α,ω-bis(2,3-epoxypropoxy)poly(oxypropylen) (CAS-Nr. [16096-30-3]) und von hydriertem Bisphenol A (2,2-bis[4-(2,3-epoxypropoxy)cyclohexyl]propan, CAS-Nr. [13410-58-7]).

Bevorzugt sind 1,4-Butandioldiglycidether, 1,6-Hexandioldiglycidylether, Trimethylolpropantriglycidylether, Pentaerythrittetraglycidylether und (2,2-bis[4-(2,3-epoxypropoxy)cyclohexyl]propan.

Besonders bevorzugt sind die oben erwähnten aromatischen Glycidylether.

Die Epoxid(meth)acrylate und -vinylether haben vorzugsweise ein zahlenmittleres Molgewicht Mₙ von 200 bis 20000, besonders bevorzugt von 200 bis 10000 g/mol und ganz besonders bevorzugt von 250 bis 3000 g/mol; der Gehalt an (Meth)acryl- oder Vinylethergruppen beträgt vorzugsweise 1 bis 5, besonders bevorzugt 2 bis 4 pro 1000 g Epoxid(meth)acrylat oder Vinyletherepoxid (bestimmt durch Gelpermeationschromatographie mit Polystyrol als Standard und Tetrahydrofuran als Elutionsmittel).

Bevorzugte Epoxid(meth)acrylate weisen eine OH-Zahl von 40 bis 400 mg KOH/g auf.

Bevorzugte Epoxid(meth)acrylate weisen eine mittlere OH-Funktionalität von 1,5 bis 4,5 auf.

Besonders bevorzugte Epoxid(meth)acrylate sind solche, wie sie aus Verfahren erhalten werden gemäß EP-A-54 105, DE-A 33 16 593, EP-A 680 985 und EP-A-279 303, bei denen in einer ersten Stufe ein (Meth)acrylsäureester aus (Meth)acrylsäure und Hydroxyverbindungen hergestellt wird und in einer zweiten Stufe überschüssige (Meth)acrylsäure mit Epoxiden umgesetzt wird.

Als Hydroxyverbindungen in Betracht kommen Verbindungen mit einer oder mehreren Hydroxygruppen. Genannt seien Monoalkohole, z.B. C₁-C₂₀-Alkanole oder alkoxylierte Alkohole mit einer verbleibenden OH-Gruppe, C₂-C₈-Alkylendiole, Trimethylpropan, Glycerin oder Pentaerythrit, oder z.B. mit Ethylenoxid und/oder Propylenoxid alkoxylierte, Hydroxygruppen enthaltende Verbindungen, beispielsweise die oben unter a) oder b) oder die unten unter c) genannten Verbindungen.

Bevorzugte Hydroxyverbindungen sind mindestens 2, insbesondere 2 bis 6 freie Hydroxygruppen enthaltende, gesättigte Polyesterole, welche gegebenenfalls auch Ethergruppen enthalten können oder Polyetherole mit mindestens 2, insbesondere 2 bis 6 freien Hydroxygruppen.

Die Molekulargewichte Mₙ der Polyesterole bzw. Polyetherole liegen bevorzugt zwischen 100 und 4000 (Mₙ bestimmt durch Gelpermeationschromatographie mit Polystyrol als Standard und Tetrahydrofuran als Elutionsmittel).

Derartige hydroxygruppenhaltige Polyesterole können z.B. in üblicher Weise durch Veresterung von Dicarbonsäuren oder Polycarbonsäuren mit Diolen oder Polyolen hergestellt werden. Die Ausgangsstoffe für solche hydroxygruppenhaltige Polyester sind dem Fachmann bekannt.

Bevorzugt können als Dicarbonsäuren Bernsteinsäure, Glutarsäure, Adipinsäure, Sebacinsäure, o-Phthalsäure, deren Isomere und Hydrierungsprodukte sowie veresterbare Derivate, wie Anhydride, z.B. Maleinsäureanhydrid, oder Dialkylester der genannten Säuren eingesetzt werden. Als Polycarbonsäure, bzw. deren Anhydride seien Tri- oder Tetrasäuren wie Trimellitsäureanhydrid oder Benzoltetracarbonsäure genannt.

Als Diole kommen vorzugsweise in Betracht Ethylenglykol, Propylenglykol-1,2 und - 1,3, Butandiol-1,4, Hexandiol-1,6, Neopentylglykol, Cyclohexandimethanol sowie Polyglykole vom Typ des Ethylenglykols mit einer Molmasse von 106 bis 2000, Propylenglykols mit einer Molmasse von 134 bis 2000 oder Poly-THF mit einer Molmasse von 162 bis 2000.

Als Polyole sind in erster Linie Trimethylolbutan, Trimethylolpropan, Trimethylolethan, Neopentylglykol, Hydroxypivalinsäureneopentylglykolester, Pentaerythrit, 2-Ethyl-1,3-Propandiol, 2-Methyl-1,3-Propandiol, 2-Ethyl-1,3-Hexandiol, Glycerin, Ditrimethylolpropan, Dipentaerythrit, 2,2-Bis(4-hydroxycyclohexyl)propan, 1,1-, 1,2-, 1,3- und 1,4-Cyclohexandimethanol, 1,2-, 1,3- oder 1,4-Cyclohexandiol oder Zuckeralkohole wie z.B. Sorbit, Mannit, Diglycerol, Threit, Erythrit, Adonit (Ribit), Arabit (Lyxit), Xylit, Dulcit (Galactit), Maltit oder Isomalt zu nennen.

Als Diole oder Polyole in Betracht kommen auch oxalkylierte (z.B. mit Ethylenoxid und/oder Propylenoxid) Diole oder Polyole, insbesondere mit einem Oxalkylierungsgrad von 0 bis 20 bevorzugt 0 - 15, besonders bevorzugt 0-10 und ganz besonders bevorzugt 1 - 5, bezogen auf die jeweiligen Hydroxygruppen des Diols oder Polyols.

Unter diesen bevorzugt sind jeweils die ausschließlich mit Ethylenoxid alkoxylierten Produkte.

Zu den einsetzbaren Polyesterolen zählen auch Polycaprolactondiole und -triole, deren Herstellung dem Fachmann ebenfalls bekannt ist.

Als hydroxygruppenhaltige Polyetherole kommen z.B. solche in Frage, welche nach bekannten Verfahren durch Umsetzung von zwei- und/oder mehrwertigen Alkoholen mit verschiedenen Mengen an Ethylenoxid und/oder Propylenoxid erhalten werden können. Desgleichen sind auch Polymerisationsprodukte des Tetrahydrofurans oder Butylenoxids oder *iso*-Butylenoxids verwendbar.

Bevorzugte hydroxygruppenhaltige Polyether sind Oxalkylierungsprodukte der obengeannten Diole oder Polyole, insbesondere mit einem Oxalkylierungsgrad von 0 bis 20, besonders bevorzugt 1 bis 15, ganz besonders bevorzugt 1 - 7 und insbesondere 1 - 5, bezogen auf die jeweiligen Hydroxygruppen des Diols oder Polyols, wobei jedoch insgesamt mindestens 2 Alkoxygruppen im Polyether vorhanden sind.

Bei der Veresterung der (Meth)acrylsäure im Falle des hydroxygruppenhaltigen Polyesters ist es z.B. auch möglich, die (Meth)acrylsäure zusammen mit Ausgangsstoffen des hydroxygruppenhaltigen Polyesters, z.B. Dicarbonsäuren oder deren Anhydride und Diole bzw. Polyole vorzulegen und die Ausgangsstoffe zusammen mit der (Meth)acrylsäure in einer Stufe umzusetzen.

Zur Veresterung von (Meth)acrylsäure mit der Hydroxyverbindung sind die dem Fachmann bekannten Verfahren geeignet.

Bei der Veresterung von (Meth)acrylsäure mit der Hydroxyverbindung werden bevorzugt 0,1 bis 1,5, besonders bevorzugt 0,5 bis 1,4 und ganz besonders bevorzugt 0,7 bis 1,3 Äquivalente (Meth)acrylsäure, bezogen auf 1 Hydroxy-Äquivalent der Hydroxyverbindungen eingesetzt. Im oben erwähntem Fall, daß von den Ausgangsstoffen, z.B. des hydroxygruppenenthaltenden Polyesters, bei der Veresterung ausgegangen wird, beziehen sich die Äquivalente der (Meth)acrylsäure auf das theoretisch nach Reaktion der Ausgangsstoffe, z.B. Reaktion von Dicarbonsäuren mit Diolen oder Polyolen, verbleibende Hydroxyäquivalent.

Die Umsetzung der (Meth)acrylsäure mit den Hydroxyverbindungen kann z.B. in Gegenwart eines sauren Veresterungskatalysators, wie z.B. Schwefelsäure, p-Toluolsulfonsäure, Dodecylbenzolsulfonsäure oder saure lonentauscher, sowie in Gegenwart eines Kohlenwasserstoffs, der mit Wasser ein azeotropes Gemisch bildet, insbesondere bis zu einem Umsatz von beispielsweise mindestens 80 %, bevorzugt mindestens 85, ganz besonders bevorzugt 90 bis 98 % und insbesondere 90 - 95%, der Hydroxygruppen der Hydroxyverbindung, beispielsweise bei 60 bis 140°C, durchgeführt werden. Das gebildete Reaktionswasser wird azeotrop entfernt. Geeignete Kohlenwasserstoffe sind aliphatische und aromatische, z.B. Alkane und Cycloalkane, wie Pentan, n-Hexan, n-Heptan, Methylcyclohexan und Cyclohexan, Aromaten wie Benzol, Toluol und die Xylol-Isomeren, und sog. Spezialbenzine, welche Siedegrenzen zwischen 70 und 140°C aufweisen.

Zur Vermeidung einer vorzeitigen Polymerisation wird die Umsetzung mit (Meth)acrylsäure zweckmäßigerweise in Gegenwart geringer Mengen von Inhibitoren durchgeführt. Dabei handelt es sich um die üblichen, zur Verhinderung einer thermischen Polymerisation verwendeten Verbindungen, z.B. vom Typ des Hydrochinons, der Hydrochinonmonoalkylether, besonders Hydrochinonmonomethylether, des 2,6-Di-t-butylphenols, der N-Nitrosoamine der Phenothiazine, der Phophorigsäureester oder der hypophosphorigen Säure. Sie werden im allgemeinen in Mengen von 0,001 bis 2,0 %, vorzugsweise in Mengen von 0,005 bis 0,5 %, bezogen auf die Reaktion in der ersten Stufe eingesetzt.

Nach der Veresterung kann das Lösungsmittel, z.B. der Kohlenwasserstoff, aus dem Reaktionsgemisch destillativ, gegebenenfalls unter vermindertem Druck, entfernt werden. Der Veresterungskatalysator kann in geeigneter Weise neutralisiert werden, z.B. durch Zusatz von tertiären Aminen oder Alkalihydroxyden. Auch überschüssige (Meth)acrylsäure kann teilweise z.B. durch Destillation im Vakuum entfernt werden.

Das Reaktionsprodukt der ersten Stufe weist vor Beginn der Umsetzung in der zweiten Stufe im allgemeinen noch eine Säurezahl (SZ) oberhalb von 20, bevorzugt von 30 bis 300, besonders bevorzugt von 35 bis 250 mg KOH/g Substanz (ohne Lösungsmittel) auf.

In der zweiten Stufe wird das in der ersten Stufe erhaltene Reaktionsprodukt mit einer oder mehreren, bevorzugt einer Epoxidverbindung umgesetzt. Epoxidverbindungen sind solche mit mindestens einer, bevorzugt mit mindestens zwei, vorzugsweise zwei oder drei Epoxidgruppen im Molekül.

In Betracht kommen z.B. epoxidierte Olefine, Glycidylester (z.B. Glycidyl(meth)acrylat) von gesättigten oder ungesättigten Carbonsäuren oder Glycidylether aliphatischer oder aromatische Polyole. Derartige Produkte werden im Handel in großer Zahl angeboten.

Besonders bevorzugt sind Polyglycidylverbindungen vom Bisphenol A-, -F- oder -B-Typ und Glycidylether mehrfunktioneller Alkohole, z.B. des Butandiol, des 1,6-Hexandiol, des Glycerin und des Pentaerythrit. Beispiele für derartige Polyepoxidverbindungen sind Epikote® 812 (Epoxidwert: ca. 0,67 mol/100g) und Epikote® 828 (Epoxidwert: ca. 0,53 mol/100g), Epikote® 1001, Epikote® 1007 und Epikote® 162 (Epoxidwert: ca. 0,61 mol/100g) der Firma Resolution, Rütapox® 0162 (Epoxidwert: ca. 0,58 mol/100g), Rütapox® 0164 (Epoxidwert: ca. 0,53 mol/100g) und Rütapox® 0165 (Epoxidwert: ca. 0,48 mol/100g) der Firma Bakelite AG, Araldit® DY 0397 (Epoxidwert: ca. 0,83 mol/100g) der Firma Huntsman.

Die Epoxidverbindungen werden dem in der ersten Stufe erhaltenen Reaktionsprodukt im allgemeinen in Mengen von mehr als 10 Gew.-%, bevorzugt 15 bis 95 Gew.-% und besonders bevorzugt 15 bis 70 Gew.-%, bezogen auf das Reaktionsgemisch der ersten Stufe (ohne Lösungsmittel), zugegeben. Ganz besonders bevorzugt werden die Epoxidverbindungen in ungefähr äquimolaren Mengen, bezogen auf die noch vorhandenen Säureäquivalente im Reaktionsprodukt der ersten Stufe, eingesetzt.

Bei der Umsetzung mit Epoxidverbindungen in der zweiten Stufe wird überschüssig eingesetzte bzw. nicht umgesetzte Säure, insbesondere (Meth)acrylsäure, daneben aber auch z.B. noch im Gemisch als Ausgangsstoff vorhandene Hydroxyverbindungen, Dicarbonsäure oder entstandene Halbester von Dicarbonsäuren mit einer verbleibenden Säuregruppe als Epoxidester gebunden.

Die Umsetzung mit Epoxidverbindungen kann durch Zugabe von Katalysatoren beschleunigt werden. Geeignete Katalysatoren sind z. B. tertiäre Alkyamine, tertiäre Alkylaminoalkohole, Tetraalkylammoniumsalze, wie beschrieben in EP 686621 A1, S. 4, Z. 9-41.

Carbonat(meth)acrylate enthalten im Mittel vorzugsweise 1 bis 5, insbesondere 2 bis 4, besonders bevorzugt 2 bis 3 (Meth)acrylgruppen und ganz besonders bevorzugt 2 (Meth)acrylgruppen.

Das zahlenmittlere Molekulargewicht Mₙ der Carbonat(meth)acrylate ist vorzugsweise kleiner 3000 g/mol, besonders bevorzugt kleiner 1500 g/mol, besonders bevorzugt kleiner 800 g/mol (bestimmt durch Gelpermeationschromatgraphie mit Polystyrol als Standard, Lösemittel Tetrahydrofuran).

Die Carbonat(meth)acrylate sind in einfacher Weise erhältlich durch Umesterung von Kohlensäureestern mit mehrwertigen, vorzugsweise zweiwertigen Alkoholen (Diolen, z.B. Hexandiol) und anschließende Veresterung der freien OH-Gruppen mit (Meth)-acrylsäure oder auch Umesterung mit (Meth)acrylsäureestern, wie es z.B. in EP-A 92 269 beschrieben ist. Erhältlich sind sie auch durch Umsetzung von Phosgen, Harnstoffderivaten mit mehrwertigen, z.B. zweiwertigen Alkoholen.

In analoger Weise sind auch Vinylethercarbonate erhältlich, indem man einen Hydroxyalkylvinylether mit Kohlensäureestern sowie gegebenenfalls zweiwertigen Alkoholen umsetzt.

Denkbar sind auch (Meth)acrylate oder Vinylether von Polycarbonatpolyolen, wie das Reaktionsprodukt aus einem der genannten Di- oder Polyole und einem Kohlensäureester sowie einem hydroxylgruppenhaltigen (Meth)acrylat oder Vinylether.

Geeignete Kohlensäureester sind z.B. Ethylen-, 1,2- oder 1,3-Propylencarbonat, Kohlensäuredimethyl-, -diethyl- oder -dibutylester.

Geeignete hydroxygruppenhaltige (Meth)acrylate sind beispielsweise 2-Hydroxyethyl-(meth)acrylat, 2- oder 3-Hydroxypropyl(meth)acrylat, 1,4-Butandiolmono(meth)acrylat, Neopentylglykolmono(meth)acrylat, Glycerinmono- und di(meth)acrylat, Trimethylolpropanmono- und di(meth)acrylat sowie Pentaerythritmono-, -di- und -tri(meth)acrylat.

Geeignete hydroxygruppenhaltige Vinylether sind z.B. 2-Hydroxyethylvinylether und 4-Hydroxybutylvinylether.

Besonders bevorzugte Carbonat(meth)acrylate sind solche der Formel: 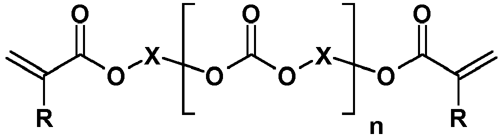 worin R für H oder CH₃, X für eine C₂-C₁₈ Alkylengruppe und n für eine ganze Zahl von 1 bis 5, vorzugsweise 1 bis 3 steht.

R steht vorzugsweise für H und X steht vorzugsweise für C₂- bis C₁₀-Alkylen, beispielsweise 1,2-Ethylen, 1,2-Propylen, 1,3-Propylen, 1,4-Butylen oder 1,6-Hexylen, besonders bevorzugt für C₄- bis C₈-Alkylen. Ganz besonders bevorzugt steht X für C₆-Alkylen.

Vorzugsweise handelt es sich bei den Carbonat(meth)acrylaten um aliphatische Carbonat(meth)acrylate.

Dazu zählen weiterhin auch übliche, dem Fachmann bekannte Polycarbonate mit endständigen Hydroxylgruppen, die z. B. durch Umsetzung der zuvor genannten Diole mit Phosgen oder Kohlensäurediestern erhältlich sind.

Polyether(meth)acrylate sind beispielsweise Mono-(Meth)acrylate von Poly-THF mit einem Molgewicht zwischen 162 und 2000, Poly-1,3-propandiol mit einem Molgewicht zwischen 134 und 2000 oder Polyethylenglykol mit einem Molgewicht zwischen 238 und 2000.

Sofern die Aushärtung der erfindungsgemäßen Dispersionen nicht mit Elektronenstrahlen, sondern mittels UV-Strahlung erfolgt, enthalten die erfindungsgemäßen Zubereitungen vorzugsweise wenigstens einen Photoinitiator, der die Polymerisation ethylenisch ungesättigter Doppelbindungen initiieren kann.

Photoinitiatoren können beispielsweise dem Fachmann bekannte Photoinitiatoren sein, z.B. solche in "Advances in Polymer Science", Volume 14, Springer Berlin 1974 oder in K. K. Dietliker, Chemistry and Technology of UV- and EB-Formulation for Coatings, Inks and Paints, Volume 3; Photoinitiators for Free Radical and Cationic Polymerization, P. K. T. Oldring (Eds), SITA Technology Ltd, London, genannten.

In Betracht kommen z.B. Mono- oder Bisacylphosphinoxide, wie sie z.B. in EP-A 7 508, EP-A 57 474, DE-A 196 18 720, EP-A 495 751 oder EP-A 615 980 beschrieben sind, beispielsweise 2,4,6-Trimethylbenzoyldiphenylphosphinoxid (Lucirin® TPO der BASF AG), Ethyl-2,4,6-trimethylbenzoylphenylphosphinat (Lucirin® TPO L der BASF AG), Bis-(2,4,6-trimethylbenzoyl)-phenylphosphinoxid (Irgacure® 819 der Firma Ciba Spezialitätenchemie), Benzophenone, Hydroxyacetophenone, Phenylglyoxylsäure und ihre Derivate oder Gemische dieser Photoinitiatoren. Als Beispiele seien genannt Benzophenon, Acetophenon, Acetonaphthochinon, Methylethylketon, Valerophenon, Hexanophenon, α-Phenylbutyrophenon, p-Morpholinopropiophenon, Dibenzosuberon, 4-Morpholinobenzophenon, 4-Morpholinodeoxybenzoin, p-Diacetylbenzol, 4-Aminobenzophenon, 4'-Methoxyacetophenon, β-Methylanthrachinon, *tert*-Butylanthrachinon, Anthrachinoncarbonysäureester, Benzaldehyd, α-Tetralon, 9-Acetylphenanthren, 2-Acetylphenanthren, 10-Thioxanthenon, 3-Acetylphenanthren, 3-Acetylindol, 9-Fluorenon, 1-Indanon, 1,3,4-Triacetylbenzol, Thioxanthen-9-on, Xanthen-9-on, 2,4-Dimethylthioxanthon, 2,4-Diethylthioxanthon, 2,4-Di-*iso*-propylthioxanthon, 2,4-Dichlorthioxanthon, Benzoin, Benzoin-*iso*-butylether, Chloroxanthenon, Benzointetrahydropyranylether, Benzoin-methylether, Benzoin-ethylether, Benzoin-butylether, Benzoin-*iso*-propylether, 7-H-Benzoin-methylether, Benz[de]anthracen-7-on, 1-Naphthaldehyd, 4,4'-Bis(dimethylamino)benzophenon, 4-Phenylbenzophenon, 4-Chlorbenzophenon, Michlers Keton, 1-Acetonaphthon, 2-Acetonaphthon, 1-Benzoylcyclohexan-1-ol, 2-Hydroxy-2,2-dimethylacetophenon, 2,2-Dimethoxy-2-phenylacetophenon, 2,2-Diethoxy-2-phenylacetophenon, 1,1-Dichloracetophenon, 1-Hydroxyacetophenon, Acetophenondimethylketal, o-Methoxybenzophenon, Triphenylphosphin, Trio-Tolylphosphin, Benz[a]anthracen-7,12-dion, 2,2-Diethoxyacetophenon, Benzilketale, wie Benzildimethylketal, 2-Methyl-1-[4-(methylthio)phenyl]-2-morpholinopropan-1-on, Anthrachinone wie 2-Methylanthrachinon, 2-Ethylanthrachinon, 2-*tert*-Butylanthrachinon, 1-Chloranthrachinon, 2-Amylanthrachinon und 2,3-Butandion.

Geeignet sind auch nicht- oder wenig vergilbende Photoinitiatoren vom Phenylglyoxalsäureestertyp, wie in DE-A 198 26 712, DE-A 199 13 353 oder WO 98/33761 beschrieben.

Typische Gemische umfassen beispielsweise 2-Hydroxy-2-Methyl-1-phenyl-propan-2-on und 1-Hydroxy-cyclohexyl-phenylketon, Bis(2,6-dimethoxybenzoyl)-2,4,4-trimethylpentylphosphinoxid und 2-Hydroxy-2-methyl-1-phenyl-propan-1-on, Benzophenon und 1-Hydroxy-cyclohexyl-phenylketon, Bis(2,6-dimethoxybenzoyl)-2,4,4-trimethylpentylphosphinoxid und 1-Hydroxy-cyclohexyl-phenylketon, 2,4,6-Trimethylbenzoyldiphenylphosphinoxid und 2-Hydroxy-2-methyl-1-phenyl-propan-1-on, 2,4,6-Trimethylbenzophenon und 4-Methylbenzophenon oder 2,4,6-Trimethylbenzophenon und 4-Methylbenzophenon und 2,4,6-Trimethylbenzoyldiphenylphosphinoxid.

Bevorzugt unter diesen Photoinitiatoren sind 2,4,6-Trimethylbenzoyldiphenylphosphinoxid, Ethyl-2,4,6-trimethylbenzoylphenylphosphinat, Bis-(2,4,6-trimethylbenzoyl)-phenylphosphinoxid, Benzophenon, 1-Benzoylcyclohexan-1-ol, 2-Hydroxy-2,2-dimethylacetophenon und 2,2-Dimethoxy-2-phenylacetophenon.

Die erfindungsgemäßen Dispersionen enthalten die Photoinitiatoren vorzugsweise in einer Menge von 0,05 bis 10 Gew.-%, besonders bevorzugt 0,1 bis 8 Gew.-%, insbesondere 0,2 bis 5 Gew.-%, bezogen auf die Gesamtmenge der Komponenten a) bis h).

Die erfindungsgemäßen Dispersionen können weitere Lack-übliche Zusatzstoffe, wie Verlaufsmittel, Entschäumer, UV-Absorber, Farbstoffe, Pigmente und/oder Füllstoffe enthalten.

Geeignete Füllstoffe umfassen Silikate, z. B. durch Hydrolyse von Siliciumtetrachlorid erhältliche Silikate wie Aerosil R der Fa. Degussa, Kieselerde, Talkum, Aluminiumsilikate, Magnesiumsilikate, Calciumcarbonate etc. Geeignete Stabilisatoren umfassen typische UV-Absorber wie Oxanilide, Triazine und Benzotriazol (letztere erhältlich als Tinuvin R-Marken der Ciba-Spezialitätenchemie) und Benzophenone. Diese können allein oder zusammen mit geeigneten Radikalfängern, beispielsweise sterisch gehinderten Aminen wie 2,2,6,6-Tetramethylpiperidin, 2,6-Di-tert.-butylpiperidin oder deren Derivaten, z. B. Bis-(2,2,6,6-tetra-methyl-4-piperidyl)sebacinat, eingesetzt werden. Stabilisatoren werden üblicherweise in Mengen von 0,1 bis 5,0 Gew.-% bezogen auf die in der Zubereitung enthaltenen "festen" Komponenten eingesetzt.

### Komponente k)

Polyamine mit 2 oder mehr primären und/oder sekundären Aminogruppen können vor allem dann eingesetzt werden, wenn die Kettenverlängerung bzw. Vernetzung in Gegenwart von Wasser stattfinden soll, da Amine in der Regel schneller als Alkohole oder Wasser mit Isocyanaten reagieren. Das ist häufig dann erforderlich, wenn wäßrige Dispersionen von vernetzten Polyurethanen oder Polyurethanen mit hohem Molgewicht gewünscht werden. In solchen Fällen geht man so vor, daß man Präpolymere mit Isocyanatgruppen herstellt, diese rasch in Wasser dispergiert und anschließend durch Zugabe von Verbindungen mit mehreren gegenüber Isocyanaten reaktiven Aminogruppen kettenverlängert oder vernetzt.

Hierzu geeignete Amine sind im allgemeinen polyfunktionelle Amine des Molgewichtsbereiches von 32 bis 500 g/mol, vorzugsweise von 60 bis 300 g/mol, welche mindestens zwei primäre, zwei sekundäre oder eine primäre und eine sekundäre Aminogruppe enthalten. Beispiele hierfür sind Diamine wie Diaminoethan, Diaminopropane, Diaminobutane, Diaminohexane, Piperazin, 2,5-Dimethylpiperazin, Amino-3-aminomethyl-3,5,5-trimethyl-cyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie Diethylentriamin oder 1,8-Diamino-4-aminomethyloctan oder höhere Amine wie Triethylentetramin, Tetraethylenpentamin oder polymere Amine wie Polyethylenamine, hydrierte Poly-Acrylnitrile oder zumindest teilweise hydrolysierte Poly-N-Vinylformamide jeweils mit einem Molgewicht bis zu 2000, bevorzugt bis zu 1000 g/mol.

Die Amine können auch in blockierter Form, z.B. in Form der entsprechenden Ketimine (siehe z.B. CA-1 129 128), Ketazine (vgl. z.B. die US-A 4 269 748) oder Aminsalze (s. US-A 4 292 226) eingesetzt werden. Auch Oxazolidine, wie sie beispielsweise in der US-A 4 192 937 verwendet werden, stellen verkappte Polyamine dar, die für die Herstellung der Polyurethane zur Kettenverlängerung der Präpolymeren eingesetzt werden können. Bei der Verwendung derartiger verkappter Polyamine werden diese im allgemeinen mit den Präpolymeren in Abwesenheit von Wasser vermischt und diese Mischung anschließend mit dem Dispersionswasser oder einem Teil des Dispersionswassers vermischt, so daß hydrolytisch die entsprechenden Polyamine freigesetzt werden.

Bevorzugt werden Gemische von Di- und Triaminen verwendet, besonders bevorzugt Gemische von Isophorondiamin und Diethylentriamin.

Der Anteil an Polyaminen kann bis zu 10, bevorzugt bis zu 8 mol-% und besonders bevorzugt bis zu 5 mol%, bezogen auf die Gesamtmenge an C=C-Doppelbindungen betragen.

Der Feststoffgehalt der erfindungsgemäßen wässrigen Dispersionen liegt vorzugsweise in einem Bereich von etwa 5 bis 70, insbesondere 20 bis 50 Gew.-%.

Die erfindungsgemäßen Polyurethane sind in der Regel pro 100 mol% reaktive Isocyanatgruppen in a) und f) (in Summe) wie folgt zusammengesetzt:
b) 30 bis 99,9 mol%, bevorzugt 40 bis 99,5 mol%, besonders bevorzugt 50 bis 99 mol%, ganz besonders bevorzugt 60 bis 97 mol% und insbesondere 70 bis 95 mol%.
c) 0 bis 20 mol%, bevorzugt 0 bis 15 mol%, besonders bevorzugt 0 bis 10 mol%, ganz besonders bevorzugt 0 bis 5 mol% und insbesondere 0 mol%,
d) 0,1 bis 40 mol%, bevorzugt 0,5 bis 35 mol%, besonders bevorzugt 1 bis 30 mol%, ganz besonders bevorzugt 3 bis 25 mol% und insbesondere 5 bis 15 mol%,
e) bis zu 10 mol%, bevorzugt bis zu 8 mol%, besonders bevorzugt bis zu 5 mol%, ganz besonders bevorzugt bis zu 2 mol% und insbesondere 0 mol%,
mit der Maßgabe, daß die Summe aller gegenüber Isocyanat reaktiven Gruppen 80 bis 125 mol% der reaktiven Isocyanatgruppen in a) und f) (in Summe) beträgt, bevorzugt 85 bis 115 mol%, besonders bevorzugt 90 bis 110 mol%, ganz besonders bevorzugt 95 bis 105 mol% und insbesondere 100 mol%.

Das Verhältnis von a) zu f) bezogen auf die reaktiven Isocyanatgruppen beträgt in der Regel 1 : 0 bis 1 : 2, bevorzugt 1 : 0 bis 1 : 1,5, besonders bevorzugt 1 : 0 bis 1 : 1,2, ganz besonders bevorzugt 1 : 0 bis 1 : 1, insbesondere 1 : 0 bis 1 : 0,5 und speziell 1 : 0.

Das zahlenmittlere Molekulargewicht Mₙ der erfindungsgemäßen Polyurethane, bestimmt durch Gelpermeationschromatographie mit Tetrahydrofuran als Elutionsmittel und Polystyrol als Standard, kann beispielsweise bis zu 50000, bevorzugt bis zu 30000, besonders bevorzugt bis zu 10000, insbesondere bis zu 5000 und speziell bis zu 2000 betragen. Weiterhin kann das Molekularegwicht bis zu 1500 oder soagr bis zu 1000 betragen

Der Gehalt an Isocyanatgruppen, berechnet als NCO mit dem Molekulargewicht 42 g/mol beträgt bei den erfindungsgemäßen Polyurethanen bis zu 5 Gew%, bevorzugt bis zu 3 Gew%, besonders bevorzugt bis zu 2 Gew%, ganz besonders bevorzugt bis zu 1 Gew% und insbesondere bis zu 0,5 Gew%. Falls blockierte Isocyanatgruppen enthalten sind, so werden diese in den Gehalt an Isocyanatgruppen mit einberechnet.

Zur Herstellung der erfindungsgemäßen Polyurethane werden die Ausgangskomponenten a), b) und d), sowie gegebenenfalls c), e) und f) bei Temperaturen von 40 bis 180°C, vorzugsweise 50 bis 150°C, unter Einhaltung des oben angegebenen NCO-/OH-Äquivalentverhältnisses miteinander umgesetzt.

Die Umsetzung erfolgt in der Regel solange, bis die gewünschte NCO-Zahl gemäß DIN 53185 erreicht ist.

Die Reaktionsdauer beträgt in der Regel 10 min bis 12 Stunden, bevorzugt 15 min bis 10 Stunden, besonders bevorzugt 20 min bis 8 Stunden und ganz besonders bevorzugt 1 bis 8 Stunden.

Zur Beschleunigung der Reaktion können gegebenenfalls geeignete Katalysatoren eingesetzt werden.

Die Bildung des Addukts aus isocyanatgruppenhaltiger Verbindung und der Verbindung, die gegenüber Isocyanatgruppen reaktive Gruppen enthält, erfolgt in der Regel durch Mischen der Komponenten in beliebiger Reihenfolge, gegebenenfalls bei erhöhter Temperatur.

Bevorzugt wird dabei die Verbindung, die gegenüber Isocyanatgruppen reaktive Gruppen enthält, zu der isocyanatgruppenhaltigen Verbindung zugegeben, besonders bevorzugt in mehreren Schritten.

Besonders bevorzugt wird die isocyanatgruppenhaltige Verbindung vorgelegt und die Verbindungen, die gegenüber Isocyanat reaktive Gruppen enthalten, zugegeben. Insbesondere wird zunächst die isocyanatgruppenhaltige Verbindung a) vorgelegt, daraufhin b) und anschließend d) zugegeben oder bevorzugt zunächst die isocyanatgruppenhaltige Verbindung a) vorgelegt, daraufhin d) und anschließend b) zugegeben. Nachfolgend können gegebenenfalls gewünschte weitere Komponenten zugegeben werden.

Selbstverständlich können b) und d) auch im Gemisch miteinander zugegeben werden.

Zur Herstellung der Polyurethandispersion wird das hergestellte Polyurethan mit Wasser vermischt. Bevorzugt wird in einem ersten Schritt die organische Phase homogen hergestellt und in einem zweiten Schritt diese organische Phase in eine Wasserphase gegeben oder eine Wasserphase in die so hergestellte organische Phase gegeben.

In der so hergestellten Dispersion ist die mittlere Teilchengröße (z-Mittelwert), gemessen mittels dynamischer Lichtstreuung mit dem Malvern® Autosizer 2 C, im allgemeinen <1000 nm, bevorzugt <500 nm und besonders bevorzugt < 100 nm. Im Normalfall beträgt der Durchmesser 20 bis 80 nm.

Zur Erzeugung der Emulsion ist in der Regel ein Energieeintrag von nicht mehr als 10⁸ W/m³ erforderlich.

Die erfindungsgemäßen Dispersionen eignen sich besonders zum Beschichten von Substraten wie Holz, Papier, Textil, Leder, Vlies, Kunststoffoberflächen, Glas, Keramik, mineralischen Baustoffen, wie Zement-Formsteine und Faserzementplatten, und insbesondere von Metallen oder beschichteten Metallen.

Vorteilhafterweise bilden die erfindungsgemäßen Dispersionen nach Härtung durch energiereiche Strahlung Filme mit guten anwendungstechnischen Eigenschaften, wie eine gute Kratzfähigkeit, gute Chemikalienfestigkeit, gute Witterungsstabilität und/oder gute mechanische Eigenschaften aus.

Die Beschichtung der Substrate erfolgt nach üblichen, dem Fachmann bekannten Verfahren, wobei man wenigstens eine erfindungsgemäße Dispersion auf das zu beschichtende Substrat in der gewünschten Stärke aufbringt und die flüchtigen Bestandteile der Dispersionen entfernt. Dieser Vorgang kann gewünschtenfalls ein- oder mehrfach wiederholt werden. Das Aufbringen auf das Substrat kann in bekannter Weise, z. B. durch Spritzen, Spachteln, Rakeln, Bürsten, Rollen, Walzen oder Gießen erfolgen. Die Beschichtungsstärke liegt in der Regel in einem Bereich von etwa 3 bis 1000 g/m² und vorzugsweise 10 bis 200 g/m².

Zur Entfernung des in der Dispersion enthaltenen Wassers wird nach dem Aufbringen auf das Substrat getrocknet, beispielsweise in einem Tunnelofen oder durch Ablüften. Die Trocknung kann auch durch NIR-Strahlung erfolgen, wobei als NIR-Strahlung hier elektromagnetische Strahlung im Wellenlängenbereich von 760 nm bis 2,5µm, bevorzugt von 900 bis 1500 nm bezeichnet ist.

Gegebenenfalls kann, wenn mehrere Schichten des Beschichtungsmittels übereinander aufgetragen werden, nach jedem Beschichtungsvorgang eine Strahlungshärtung erfolgen.

Die Strahlungshärtung erfolgt durch Einwirkung energiereicher Strahlung, also UV-Strahlung oder Tageslicht, vorzugsweise Licht der Wellenlänge 250 bis 600 nm oder durch Bestrahlung mit energiereichen Elektronen (Elektronenstrahlung; 150 bis 300 keV). Als Strahlungsquellen dienen beispielsweise Hochdruckquecksilberdampflampen, Laser, gepulste Lampen (Blitzlicht), Halogenlampen oder Excimerstrahler. Die üblicherweise zur Vernetzung ausreichende Strahlungsdosis bei UV-Härtung liegt im Bereich von 80 bis 3000 mJ/cm².

Die Bestrahlung kann gegebenenfalls auch unter Ausschluß von Sauerstoff, z. B. unter Inertgas-Atmosphäre, durchgeführt werden. Als Inertgase eignen sich vorzugsweise Stickstoff, Edelgase, Kohlendioxid oder Verbrennungsgase. Desweiteren kann die Bestrahlung erfolgen, indem die Beschichtungsmasse mit transparenten Medien abgedeckt wird. Transparente Medien sind z. B. Kunststofffolien, Glas oder Flüssigkeiten, z. B. Wasser. Besonders bevorzugt ist eine Bestrahlung in der Weise, wie sie in der DE-A1 199 57 900 beschrieben ist.

In einem bevorzugten Verfahren erfolgt die Aushärtung kontinuierlich, indem man das mit der erfindungsgemäßen Zubereitung behandelte Substrat mit konstanter Geschwindigkeit an einer Strahlungsquelle vorbeiführt. Hierfür ist es erforderlich, dass die Aushärtungsgeschwindigkeit der erfindungsgemäßen Zubereitung ausreichend hoch ist.

Diesen unterschiedlichen zeitlichen Verlauf der Härtung kann man sich insbesondere dann zu Nutze machen, wenn sich an die Beschichtung des Gegenstandes noch ein Verarbeitungsschritt anschließt, bei dem die Filmoberfläche in direkten Kontakt mit einem anderen Gegenstand tritt oder mechanisch bearbeitet wird.

Der Vorteil der erfindungsgemäßen Dispersionen liegt darin, dass man die beschichteten Gegenstände unmittelbar im Anschluß an die Strahlungshärtung weiterverarbeiten kann, weil die Oberfläche nicht mehr klebt. Andererseits ist der getrocknete Film noch so flexibel und dehnbar, dass der Gegenstand noch verformt werden kann, ohne dass der Film dabei abplatzt oder reißt.

Ein weiterer Gegenstand der Erfindung ist die Verwendung einer Dispersion, wie zuvor beschrieben, zur Beschichtung von Substraten aus Metall, Holz, Papier, Keramik, Glas, Kunststoff, Textil, Leder, Vlies oder mineralischen Baustoffen.

Die die erfindungsgemäßen Polyurethandispersionen können insbesondere als Grundierungen, Füller, pigmentierte Decklacke und Klarlacke im Bereich Industrie-, insbesondere Flugzeug- oder Großfahrzeuglackierung, Holz-, Auto-, insbesondere OEM- oder Autoreparaturlackierung, oder Dekolackierung eingesetzt werden. Besonders geeignet sind die Beschichtungsmittel für Anwendungen, in denen eine besonders hohe Applikationssicherheit, Außenwitterungsbeständigkeit, Optik, Lösemittel- und/oder Chemikalienfestigkeit gefordert werden.

Die Erfindung wird anhand der folgenden, nicht einschränkenden Beispiele näher erläutert.

### Beispiele

Soweit nicht anders angegeben, beziehen sich angegebene Teile und Prozente auf das Gewicht.

### Polyisocyanat A:

Als Polyisocyanat A wurde ein allophanatgruppenhaltiges Polyisocyanat aus 1,6-Hexamethylendiisocyanat und 2-Hydroxyethylacrylat hergestellt analog Beispiel 1 der WO 00/39183, so dass nach destillativer Abtrennung des unumgesetzten 1,6-Hexamethylendiisocyanat (Restmonomerengehalt < 5 Gew.%) ein Polyisocyanat mit einem NCO-Gehalt von 14,9 %, einer Viskosität bei 23°C von 1200 mPas und einer via ¹H-NMR bestimmten Doppelbindungsdichte von 2 mol/kg erhalten wurde.

### Polyether A:

Auf Methanol gestartetes, unter Kaliumhydroxidkatalyse hergestelltes, monofunktionelles Polyethylenoxid mit einer OH-Zahl von 112, gemessen nach DIN 53 240, entsprechend einem Molekulargewicht von 500 g/mol. Die noch anwesenden Katalysatorreste wurden anschließend mit Essigsäure neutralisiert. Die Basizität wird durch Titration mit HCl zu 10,6 mmol/kg bestimmt.

### Beispiel 1:

In einem Reaktionsgefäß versehen mit Rührer, Thermometer und Rückflusskühler wurden 141 g des Polyisocyanates A mit 0,1 g 4-Methoxyphenol und 0,2 g Kerobit® TBK (2,6-di-tert-Butyl-p-Kresol der Fa. Raschig, als Stabilisatoren) mit 29 g 2-Hydroxyethylacrylat versetzt. Bei Zusatz von Dibutylzinndilaurat als Katalysator beobachtete man eine exotherme Reaktion begleitet von einer Temperaturerhöhung bis auf ca. 65°C. Bei 55°C wurde anschließend 15 min lang nachreagiert. Danach gab man 50g des Polyethers A und 75 g Capa 212 (Polycaprolactondiol der Fa. Solvay, Molmasse 1000 g/mol, OH-Zahl 113 mg KOH/g) zu, wobei wiederum Wärmeentwicklung auftrat und die Temperatur des Ansatzes auf ca. 68°C stieg. Nach einer Reaktionszeit von 2 h bei 65 °C war das Produkt sehr gut wasserdispergierbar. Der NCO-Gehalt des Produktes liegt bei 0 %, die Viskosität betrug 93.000 mPa^{∗}s.

Zur Dispergierung wurde eine Lösung von 100 g des so erhaltenen Produktes in 77 mL Aceton unter Rühren mit 124 mL Wasser versetzt. Anschließend wurde das Aceton im Vakuum abdestilliert und mit 60 mL Wasser verdünnt. Die so erhaltenen Dispersion weist einen Feststoffgehalt von 35 %, eine Viskosität von 3 mPa^{∗}s und eine mittlere Teilchengröße von 256,4 nm auf.

Durch Dispergierung von 100 g des erhaltenen Harzes in 185 mL Wasser mittels Dissolver wurde eine feinteilige, blaustichige Dispersion mit einem Feststoffgehalt von 35 %, einer Viskosität von 4 mPa^{∗}s und einer mittleren Teilchengröße von 67,3 nm erhalten.

### Beispiel 2 (nicht erfindungsgemäß)

In einem Reaktionsgefäß versehen mit Rührer, Thermometer und Rückflusskühler wurden 282 g des Polyisocyanates A mit 0,2 g 4-Methoxyphenol und 0,4 g Kerobit® TBK (2,6-di-tert-Butyl-p-Kresol der Fa. Raschig, als Stabilisatoren) mit 87 g 2-Hydroxyethylacrylat versetzt. Bei Zusatz von Dibutylzinndilaurat als Katalysator beobachtete man eine exotherme Reaktion. Bei 60°C wurde anschließend 15 min lang nachreagiert. Danach gab man 125 g des Polyethers B zu. Nach einer Reaktionszeit von 3,5 h bei 65 °C war das Produkt sehr gut wasserdispergierbar.

Der NCO-Gehalt des Produktes liegt bei 0 %, die Viskosität betrug 2410 mPa^{∗}s.

### Beispiel 3 (nicht erfindungsgemäß)

In einem Reaktionsgefäß versehen mit Rührer, Thermometer und Rückflusskühler wurden 282 g des Polyisocyanates A mit 0,2 g 4-Methoxyphenol und 0,4 g Kerobit® TBK (2,6-di-tert-Butyl-p-Kresol der Fa. Raschig, als Stabilisatoren) mit 360,4 g Pentaerythrittriacyrylat versetzt. Bei Zusatz von Dibutylzinndilaurat als Katalysator beobachtete man eine exotherme Reaktion. Bei 60°C wurde anschließend 30 min lang nachreagiert. Danach gab man 150 g des Polyethers B zu. Nach einer Reaktionszeit von 3,5 h bei 65 °C war das Produkt sehr gut wasserdispergierbar.

Der NCO-Gehalt des Produktes liegt bei 0 %, die Viskosität betrug 15.700 mPa^{∗}s.

## Patentansprüche

1. Strahlungshärtbare dispergierbare Polyurethane, aufgebaut aus
a) wenigstens einer Verbindung mit mindestens zwei freien Isocyanatgruppen, mindestens einer Allophanatgruppe und mindestens einer über die Allophanatgruppe gebundenen, radikalisch polymerisierbaren C=C-Doppelbindung, in der direkt an die Doppelbindung eine Carbonylgruppe oder ein Sauerstoffatom in Etherfunktion gebunden ist,
b) wenigstens einer Verbindung mit mindestens einer, bevorzugt genau einer gegenüber Isocyanatgruppen reaktiven Gruppe und mindestens einer radikalisch polymerisierbaren C=C-Doppelbindung,
c) gegebenenfalls wenigstens einer Verbindung mit mindestens zwei gegenüber Isocyanatgruppen reaktiven Gruppen, die ausgewählt sind unter Hydroxyl-, Mercapto-, primären und/oder sekundären Aminogruppen,
d) mindestens einer Verbindung mit genau einer gegenüber Isocyanat reaktiven Gruppe und mindestens einer dispergieraktiven nichtionischen Gruppe, wobei es sich bei der dispergieraktiven nichtionischen Gruppe um einen monofunktionellen Polyalkylenoxidpolyetheralkohol handelt, der im statistischen Mittel mindestens 5 und bis zu 50 Ethylenoxideinheiten in einpolymerisierter Form aufweist,
e) gegebenenfalls wenigstens einer von b) und d) verschiedenen Verbindung, die genau eine gegenüber Isocyanatgruppen reaktive Gruppe aufweist sowie
f) gegebenenfalls wenigstens einem von a) verschiedenen Polyisocyanat.

2. Polyurethandispersionen, die weniger als 0,1 Gew.-% thermische Initiatoren mit Halbwertzeit bei 60 °C von mindestens einer Stunde enthalten, und die zusätzlich zu den dispergierbaren Polyurethanen gemäß Anspruch 1 folgende Komponenten enthalten
h) gegebenenfalls weitere Zusatzstoffe, die ausgewählt sind unter Reaktivverdünnern, Photoinitiatoren und üblichen Lackzusatzstoffen,
i) Wasser sowie
k) gegebenenfalls mindestens ein Di- und/oder Polyamin.

3. Polyurethan gemäß Anspruch 1, **dadurch gekennzeichnet, daß** es eine Doppelbindungsdichte von mindestens 1,3 mol/kg aufweist.

4. Polyurethan und Polyurethandispersion gemäß einem der vorstehenden Ansprüche, **dadurch gekennzeichnet, daß** als Komponente c) ausschließlich niedermolekulare Alkohole c1) mit einem Molekulargewicht von nicht mehr als 500 g/mol anwesend sind.

5. Polyurethan und Polyurethandispersion gemäß einem der vorstehenden Ansprüche, **dadurch gekennzeichnet, daß** keine Komponente c) anwesend ist.

6. Polyurethan und Polyurethandispersion gemäß einem der vorstehenden Ansprüche, **dadurch gekennzeichnet, daß** das Verhältnis von a) zu f), bezogen auf die reaktiven Isocyanatgruppen, 1 : 0 bis 1 : 2 beträgt.

7. Polyurethandispersion gemäß einem der vorstehenden Ansprüche 2 sowie 4 bis 6, **dadurch gekennzeichnet, daß** die mittlere Teilchengröße (z-Mittelwert), gemessen mittels dynamischer Lichtstreuung mit dem Malvern® Autosizer 2 C, <1000 nm beträgt.

8. Substrat, beschichtet mit einer Polyurethandispersion gemäß einem der vorstehenden Ansprüche 2 sowie 4 bis 7.

9. Verfahren zum Beschichten von Substraten, **dadurch gekennzeichnet, daß** man eine Polyurethandispersion gemäß einem der Ansprüche 2 sowie 4 bis 7 auf ein Substrat aufbringt, anschließend trocknet und strahlungshärtet.

10. Verwendung von Polyurethandispersionen gemäß einem der Ansprüche 2 sowie 4 bis 7 zum Beschichten von Substraten.

## Claims

1. A radiation-curable dispersible polyurethane synthesized from
a) at least one compound having at least two free isocyanate groups, at least one allophanate group, and at least one free-radically polymerizable C=C double bond attached via the allophanate group, in which a carbonyl group or an oxygen atom in ether function is attached directly to the double bond,
b) at least one compound having at least one, preferably precisely one group that is reactive toward isocyanate groups, and at least one free-radically polymerizable C=C double bond,
c) if appropriate, at least one compound having at least two groups that are reactive toward isocyanate groups, selected from hydroxyl, mercapto, and primary and/or secondary amino groups,
d) at least one compound having precisely one group that is reactive toward isocyanate, and at least one dispersive non-ionic group, the dispersive non-ionic group being a monofunctional polyalkylene oxide polyether alcohol which contains at least 5 and up to 50 polymerised ethylene oxide units in the stable medium,
e) if appropriate, at least one compound different from b) and d), containing precisely one group that is reactive toward isocyanate groups, and
f) if appropriate, at least one polyisocyanate different from a).

2. A polyurethane dispersion comprising less than 0.1% by weight of thermal initiators having a half-life at 60°C of at least one hour and comprising further to the dispersible polyurethane according to claim 1 the following components:
h) optionally, further additives, selected from reactive diluents, photoinitiators, and customary coatings additives,
i) water, and
k) optionally, at least one diamine and/or polyamine.

3. The polyurethane according to claim 1, which has a double bond density of at least 1.3 mol/kg.

4. The polyurethane or polyurethane dispersion according to any one of the preceding claims, wherein low molecular weight alcohols c1) having a molecular weight of not more than 500 g/mol are present exclusively as component c).

5. The polyurethane or polyurethane dispersion according to any one of the preceding claims, wherein no component c) is present.

6. The polyurethane or polyurethane dispersion according to any one of the preceding claims, wherein the ratio of a) to f), based on the reactive isocyanate groups, is 1 : 0 to 1 : 2.

7. The polyurethane dispersion according to any one of the preceding claims 2, and 4 to 6, wherein the average particle size (z-average), measured by means of dynamic light scattering using the Malvern® Autosizer 2 C, is < 1000 nm.

8. A substrate coated with a polyurethane dispersion according to any one of the aforementioned claims 2, and 4 to 7.

9. A method of coating a substrate, which comprises applying a polyurethane dispersion according to any one of claims 2, and 4 to 7 to a substrate, followed by drying and radiation curing.

10. The use of a polyurethane dispersion according to any one of claims 2, and 4 to 7 for coating a substrate.

## Revendications

1. Polyuréthanes dispersibles, durcissables par un rayonnement, constitués par
a) au moins un composé présentant au moins deux groupes isocyanate libres, au moins un groupe allophanate et au moins une double liaison C=C polymérisable par voie radicalaire, liée via le groupe allophanate, dans lequel un groupe carbonyle ou un atome d'oxygène à fonction éther est lié directement à la double liaison,
b) au moins un composé présentant au moins un, de préférence exactement un, groupe réactif par rapport aux groupes isocyanate et au moins une double liaison C=C polymérisable par voie radicalaire,
c) le cas échéant au moins un composé présentant au moins deux groupes réactifs par rapport aux groupes isocyanate, qui sont choisis parmi les groupes hydroxyle, mercapto, amino primaire et/ou secondaire,
d) au moins un composé présentant exactement un groupe réactif par rapport à isocyanate et au moins un groupe non ionique actif en dispersion, le groupe non ionique actif en dispersion étant un poly(oxyde d'alkylène)-polyétheralcool monofonctionnel qui présente en moyenne statistique au moins 5 et jusqu'à 50 motifs d'oxyde d'éthylène sous forme copolymérisée,
e) le cas échéant au moins un composé différent de b) et de d), qui présente exactement un groupe réactif par rapport aux groupes isocyanate, ainsi que
f) le cas échéant au moins un polyisocyanate différent de a).

2. Dispersions de polyuréthane, qui contiennent moins de 0,1% en poids d'initiateurs thermiques présentant une demi-vie à 60°C d'au moins une heure et qui contiennent, en plus des polyuréthanes dispersibles selon la revendication 1, les composants suivants
h) le cas échéant d'autres additifs qui sont choisis parmi les diluants réactifs, les photo-initiateurs et les additifs usuels pour laque,
i) de l'eau ainsi que
k) le cas échéant au moins une diamine et/ou polyamine.

3. Polyuréthane selon la revendication 1, **caractérisé en ce qu'**il présente une densité de doubles liaisons d'au moins 1,3 mole/kg.

4. Polyuréthane et dispersion de polyuréthane selon l'une quelconque des revendications précédentes, **caractérisés en ce que**, comme composant c), des alcools de bas poids moléculaire c1) présentant un poids moléculaire qui n'est pas supérieur à 500 g/mole sont exclusivement présents.

5. Polyuréthane et dispersion de polyuréthane selon l'une quelconque des revendications précédentes, **caractérisés en ce qu'**aucun composant c) n'est présent.

6. Polyuréthane et dispersion de polyuréthane selon l'une quelconque des revendications précédentes, **caractérisés en ce que** le rapport de a) à f), par rapport aux groupes isocyanate réactifs, vaut 1:0 à 1:2.

7. Dispersion de polyuréthane selon l'une quelconque des revendications précédentes 2 ainsi que 4 à 6, **caractérisée en ce que** la grosseur moyenne de particule (valeur moyenne z) mesurée par dispersion dynamique de la lumière avec le Malvern® Autosizer 2 C, est < 1000 nm.

8. Substrat, revêtu par une dispersion de polyuréthane selon l'une quelconque des revendications précédentes 2 ainsi que 4 à 7.

9. Procédé pour le revêtement de substrats, **caractérisé en ce qu'**on applique une dispersion de polyuréthane selon l'une quelconque des revendications 2 ainsi que 4 à 7 sur un substrat, on la sèche ensuite et on la durcit par un rayonnement.

10. Utilisation de dispersions de polyuréthane selon l'une quelconque des revendications précédentes 2 ainsi que 4 à 7 pour le revêtement de substrats.
